(19)

Europäisches
Patentamt
European
Patent Office
Office européen
des brevets

(11) **EP 2 071 182 B1**

(12) **EUROPEAN PATENT SPECIFICATION**

(45) Date of publication and mention
of the grant of the patent:
**22.12.2010  Bulletin 2010/51**

(51) Int Cl.:
*F03B 17/00* *(2006.01)*   *F03B 13/06* *(2006.01)*
*F03G 7/00* *(2006.01)*   *F03B 1/00* *(2006.01)*

(21) Application number: **08002546.3**

(22) Date of filing: **12.02.2008**

(54) **A multiple energy inputs hydropower system**

Ein Hydropowersystem mit mehrfacher Energieaufnahme

Un système d'hydro-électricité à multiples absorptions d'énergie

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **14.12.2007  CN 200710195991**

(43) Date of publication of application:
**17.06.2009  Bulletin 2009/25**

(73) Proprietor: **Ching, Jose
Sta. Mesa, Manila 1016 (PH)**

(72) Inventor: **Ching, Jose
Sta. Mesa, Manila 1016 (PH)**

(74) Representative: **Altenburg, Udo
Bardehle Pagenberg
Galileiplatz 1
81679 München (DE)**

(56) References cited:
**EP-A- 1 850 000   WO-A-2004/094816
WO-A-2006/085782**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention is a hydropower system, more particularly; it is a system that uses the elevation head; the velocity head and the elastic potential energy of water to produce electricity.

BACKGROUND OF THE INVENTION

Force is a quantity that pushes or pulls a body. It can be nature induced or machine induced. It is measured in newton ( n ), force that produced displacement (m) constitutes work ( n · m ). The applied force is proportional to the displacement produced. The bigger the force applied on a particular mass, the bigger would be the displacement.
Mechanical energy is defined as a capacity to do work. It produces work which involves a quantity of force. Energy has the same expressed term as work; because work is also the measured amount of energy that is transferred. They are both termed in joules or newton-meters ( n · m ).
There is a latent quantity of force existing in the mechanical energy.
Mechanical energy can produce force. Take for example; the force applied on a compression spring is proportional to the displacement or its change in length $\Delta m$. The work done on the spring is equal to the elastic potential energy (n · m) and it is stored in the spring. Upon release of the compressive force, this elastic potential energy will perform an amount of work, producing a quantity of force ( n ) that could elongates the spring a length $\Delta m$. Although the two quantities - force ( n ) and energy ( n · m ) are not equal nor even similar, they however are intrinsically intertwined.
According to the Principle of Conservation of Energy, it can not be created nor destroyed; but it can be transformed; transferred; accumulated; stored and can either be harnessed for constructive use producing usable energy or be converted into various dissipated forms.
At present time, prominent traditional hydro-electric power plants are sited on great natural waterways, e.g. the Hoover Dam is on the Colorado River. The building of dam and elevating the height of the water surface to provide the stored volume and increase the elevation head of the waterways constitute the main features of our present day hydropower. The single input is the natural gravitational force induced elevation head which is transformed either into velocity head to run an impulse turbine or into pressure head to run a reaction turbine. And the single output being electrical energy.
This traditional hydropower has no input of electrical energy.
At present, hydropower is considered as one of the best, if not the best form of energy. It is clean. It is relatively economical as it is being recycled by Mother Nature through the water cycle. No fossil fuel is used. No harmful gases are emitted into the atmosphere.
These however has its limitations and shortcomings.
First, it is limited only to sites where big natural waterways flow. These sites are usually in far flung area where the power transmission lines to the cities are not only expensive, but also cause power losses.
Second, its operation is entirely dependent on the seasonal precipitations, such that its average annual output is only about 50% of the installed capacity.
Third, building a dam could inundate farmlands and it could carry heavy social costs.
Fourth, the construction time of a dam is very long.
Fifth, the required civil works are expensive.
Sixth, the continuous removing of the upstream debris is a tedious maintenance work, and the sedimentation problem is always present.
And lastly, there is always the danger of dam failure that could have catastrophic consequences to lives and properties.
In a related prior arts, this applicant had an application numbered PCT/Ph2005/000015 with published number WO2006/085782 entitled "Re-circulating Water in a Closed Loop Hydropower System".
The prior art had the feature that it is subjected to the dissipative frictional force and the constant gravitational force. This wanes the energy output and eventually exhausts the energy content of the system.
WO 2006/085782 A1 discloses a system wherein a controlled volume of water is recirculated in a closed loop continually for the generation of electricity.
WO 2004/094816 A1 discloses an apparatus for producing electricity or power with a continuous water circle by making unreal level or industrial level with real water.
EP 1 850 000 A1 discloses an apparatus which enhances the performance of a hydro-power plant by combining a pelton turbine with several modules.

## Summary of the invention

The aim of the present invention is to overcome the shortcomings of the prior arts. The present invention has added new equipments and features to achieve this purpose.

Primarily, the present invention has incorporated a re-boosting pump (27) to re-boost and to supply additional pressure energy input to the system periodically. The re-boosting pump gets its energy from the starting/ re-boosting generator (3). This works to keep the level of the energy output sustainable.

Another feature of the present invention is that it has incorporated a convergence recoil nozzle ( 29 ) that utilizes the recoil force of the water jet. This recoil force which is equal in magnitude and opposite in direction, will push a piston ( 31 ) that is inside a pressure chamber ( 30 ). This force is capable of doing different kinds of works, such as a pressurized liquid to add energy input to the system through the pressure pipe ( 34 ) into the main penstock ( 9 ), or it can be used as a pressure energy for the desalination of saline water.

The present invention is an improved and a much enlarged hydropower system. It is powered by eight forms of forces which are mostly natural occurring. A big portion of the whole range of energy inputs are converted into electric energy; with only one kind of input that consumes electric energy- that being the motor pumps. This fractional input of electric based energy is smaller than the SINGLE CONSOLIDATED OUTPUT of electric power generated by the whole conversion system. This system is in a closed loop with a controlled volume of water re-circulating continually within. Periodically, it is re-boosted by a re-boosting pump outside of the energy loop as energy output wanes.

Initially, water from a ground level reservoir is given a boost in pressure head by a motor pump to push forward in a 1200 meter long main penstock; passing by pressure relief valve; surge tanks; vacuum suction pipes; auxiliary pipes; periodic re-boosting pipe and ends with a uni-direction spherical valve high up inside the powerhouse.

The continuously rotating spherical valve stops the fast water column in a " rapid closure " mode, transforming the combined pressure, kinetic and elastic energies accumulated in the entire water column into a water hammer of immense pressure energy. As the spherical valve re-opens, pressurized water is re-transformed into a high kinetic energy jet that shoots out of the main penstock to impinge on the Pelton turbine generator to produce electric energy.

The spent water is received by the tail reservoir. It is then drained by gravitational force through the outflow pipe back to the original main reservoir completing the loop.

This system has a complementary sub-loop of re-circulating water path. When the spherical valve is opened rapidly, huge volume of high compressed water jets out of the main penstock, forming a low pressured vacuum upstream. The accompanied suction force would pull in water from the main reservoir directly into the main penstock through the vacuum suction pipes, bypassing the main pump. This operates as the high pressure energy is transformed into a low pressured vacuum condition forming suction force. This mechanism of water transferring functions like an electric pump but without consuming any electrical power. This works to stabilize the pressure and to increase significantly the volume of water in the main penstock. An auxiliary pump ( 24 ) sustains the pressure and the volume of water needed. The water jet impinges on the Pelton turbine generator to produce electric energy.

Simultaneously as jet is being forced out of the re-coil nozzle( 29 ), an EQUAL and opposite in direction force is exerted on the recoil nozzle which can do different kinds of work. One embodiment is to move the piston inside a pressure chamber ( 30 ) to push liquid in the pressure pipeline ( 34 ) to add pressure force to the system.

The spent water is received by the tail reservoir. It is drained by gravitational force back to the originating main reservoir ( 1 ) completing the complementary sub-loop.

These water flow loops are congruent with the energy flow loops.

The recoil force can also be used to do other methods of work: ( A ) its reciprocating action can drive a linear to continuous rotary motion assembly where the rotating element is coupled to the rotor of a generator to produce electricity; (B) another method is to utilize the pressure force to run a desalination tank where salts and dilutes are removed by membrane thru reverse osmosis or other process.

As with all moving energy system subjected to dissipative friction and gravity, it will eventually wanes its power output; therefore an out of the energy loop re-boosting pump is used periodically to sustain the intended power output.

The present invention is a system that has several advantages over the traditional systems.

First, it uses a controlled volume of water to generate power in a recycling mode, thus its utilization rate is much higher.

Second, site selection is very wide. It can be built adjacent to big load centers without the long transmission line. The site can be any flat plain or a mountain plateau with slope and plain. It should be near a natural source of water either above ground or sub-terrain, fresh or saline.

Third, the construction time is much shorter.

Fourth, it is less expensive.

## BRIEF DESCRIPTION OF THE DRAWINGS

Fig. 1 shows the upstream of the system with the main pump( 6 ); gate valve ( 8 ); pressure relief valve( 12 ); two surge tanks( 13 ) and the main penstock( 9 ).

Fig. 2 shows the Pelton turbine generator (14 & 15) receiving water jet from main penstock A ( 9-A ) which is completely opened while the opposite main penstock B ( 9-B ) is completely closed. ( recoil nozzle is omitted for clarity)

Fig. 3 shows the main uni-direction spherical valve ( 5 ) in a rotating sequence, forming water hammer pressure in the main penstock. Then releasing its power as transformed kinetic energy water jet.

Fig. 4 shows the frontal view of the uni-direction spherical valve.

Fig. 5 shows the projected graph of the discharge from the main penstock.

Fig. 6 shows the projected graph of two discharges from the two main penstock overlapping as a function of time.

Fig. 7 shows the auxiliary pump ( 24 ) and the auxiliary uni-direction spherical valve (26) that draws water from the main reservoir.

Fig. 8 shows the re-coil nozzle ( 29 ) with a pressure chamber ( 30) attached to the end of the spherical valve ( 5 ). The nozzle has an air chamber ( 29-a ); an exhaust orifice ( 29-b ); mechanical spring ( 29-e ) ; support columns ( 29-c ) and guide rail ( 29-d ). Inside the pressure chamber is the piston ( 31 ) that will force the liquid out of the chamber into the pressure pipe ( 34 ) to add pressure force to the main penstock ( 9 ) and that will draw in liquid through the suction pipe ( 32 ) as the piston moves back expanding the space of the chamber.

Fig. 9 is the plane view of Fig. 8 showing the compression phase of the recoil nozzle with the pressure chamber ( 30 ).

Fig. 10 shows the relative positions of the main spherical valve ( 5 ) and the auxiliary spherical valve ( 26 ) as a function of time.

Fig. 11 is the plane view of the present invention of power conversion system together with the out of the loop re-boosting pump ( 27 ).

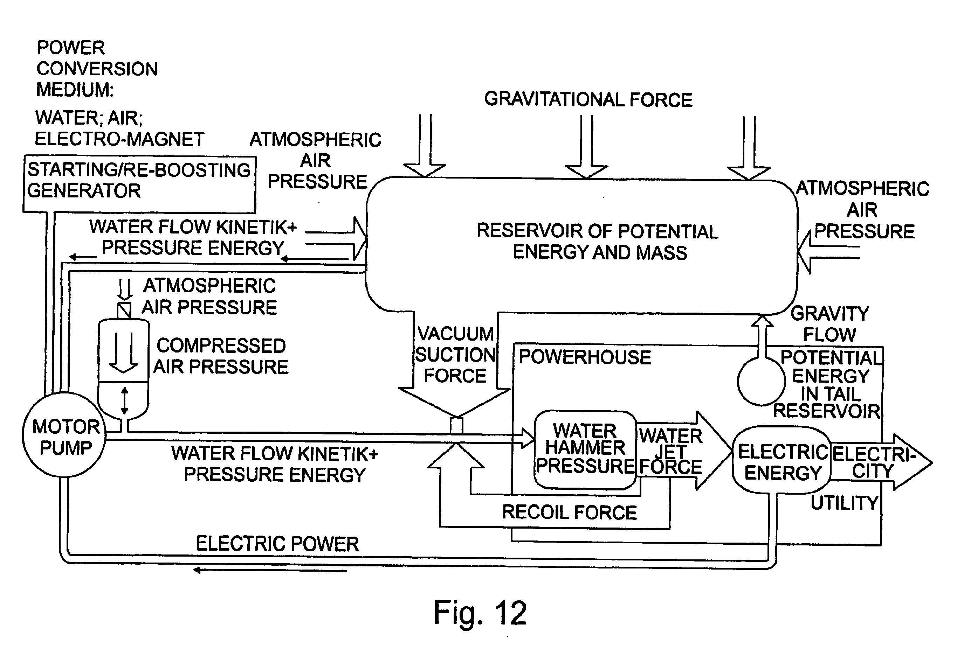

Fig.12 is the diagram of the present invention of power conversions system energy flow paths showing the closed energy loops plus the out of the loop re-boosting energy input.

Fig. 13 shows the replenishment pipe ( 21 ) drawing water from nearby natural source of water into the reservoir of the system.

Fig. 14 shows the second embodiment of the present invention — elevation head in an upper reservoir ( 22 ) substituting the main pump ( 6 ) pressure head as an energy input.

## DETAILED DESCRIPTION OF THE INVENTION

Water hammer is defined as the excess pressure ( above the normal hydraulic gradient line pressure ) - brought about by the sudden change of water flow velocity in a closed pipeline. The highest water hammer pressure is formed when the valve is in a " Rapid Closure " i.e., the valve closing time < 2 L / Wp where L is the length of the pipeline and Wp is the celerity or pressure wave of water which is about 1,476 m/s at 20° C. The celerity is a function of its modulus of elasticity $E_v$. The modulus of elasticity of water is 2.18 x $10^9$ n/$m^2$. The formula for celerity is Wp = ( $E_v$/ $D_m$ )$^{1/2}$ ; where Dm is the density of the liquid. Then Wp =[( 2.18 x $10^9$ n/$m^2$ ) / (1000kg / $m^3$)]$^{1/2}$ = 1476 m/s.

The total pressure at the penstock would be equal to the water hammer pressure plus the original steady state flow pressure head.

The present invention uses water; air and electro-magnet as mediums for energy conversions. Various forms of natural forces are collected and transformed into a distinctive power conversion system. Permanent forces such as gravitational force, atmospheric air pressure and other dynamic forces, i.e. water hammered jet force; vacuum suction force; jet recoil force; compressed air pressure and inertia can be harnessed to form substantial inputs of a power conversions system to generate electrical energy by means of a Pelton turbine- generator.

The illustrations and calculations of the system are presented on the following specifics:

( A ) Fresh water is used as the medium. At sea level, fresh water has a density of 1,000 kg/$m^3$ and sp. wt. of 9.81 kn/$m^3$. On a broader scope, other liquid can be used. If sea water is used, then the figure is about 3% higher. The density is then 1030 kg/$m^3$.

( B ) The inner diameter of the main penstock is one meter. On a broader scope, it can range from 30 cm. up to one meter.

( C ) The head of the pump is 260 meters. On a broader scope, it can range from 130 meters to 400 meters and up.

The formula for calculating the water hammer pressure is:

$$P_h = D_m \ V \ Wp$$

Where

$D_m$ is the mass density of liquid. For fresh water, it is 1,000 kg/m$^3$
V is the velocity of the flowing water inside the penstock in a steady state, term is in m/s.
Wp is the pressure wave velocity inside the penstock, unit is in m/s. At 20°C, it is about 1478 m/s. It is an inherent property of water.

After about one minute of the pump start-flow, a steady flow of water with velocity of 12.66 m/s is achieved, it is then rapidly closed by a valve. Assuming the Wp is 1,428 m/s, then the water hammer pressure in the pipe with length of about 1200 meters is calculated as:

$$P_h = D_m \ V \ Wp$$

$$= 1{,}000 \text{ kg/m}^3 \ ( \ 12.66 \text{ m/s} \ ) \ ( \ 1{,}428 \text{ m/s} \ ) \ .$$

$$= 18{,}078{,}480 \ ( \ kg \cdot m/s^2 \ ) \ ( \ 1/m^2 \ ) = 18{,}078{,}480 \ n/m^2 \ = 18{,}078 \text{ kpa}$$

in term of energy head, the formula is : P/Wsp,
where

P is the pressure force, unit is in n/m$^2$
Wsp is the specific weight of water which is about 9810 n/m$^3$.

Therefore: the energy head = 18,078,480 pa / 9810 n/m$^3$ = 1,842 meters.
This 1,842 meters of water hammer pressure head is much higher than the velocity head possessed by the liquid in the original steady state of flow.
We solve for the velocity head Hv of the original steady state flow of 12.66 m/s

$$Hv = Vel^2 \ / \ 2g$$

$$= 12.66 \ ^2 / \ 19.62 \ = 8.17 \text{ meters}$$

The big disparity in the energy head, from the original head of 8.17 meters to the induced and accumulated high pressure head of 1850m.( 1842 + 8.17 ) is one of the basic features of the present invention. This will turn the destructive force of water hammer pressure into a constructive force and transform it into usable electrical energy.
It is an accepted scientific fact that there exists a latent pool of kinetic energy in the inter-molecular spaces of liquid, even it is at rest. This is the result of the constant movements and collisions of the molecules. This is known as the Brownian motion. This activity is also characterized as a motive force or as a form of inter-molecular interactions of liquid.
These interactions act like "miniscule springs" in between the molecules. As the atmospheric liquid undergoes high compression, the volume is diminished; squeezing the inter-molecular spaces. This compressive force will convert the latent kinetic energy into an added potential elastic energy. This is on top of the supplied pressure energy from the main pump (6).
This phenomenon intensifies the water hammer into a pressure of immense proportion.
In our example case, it's volume is compressed short by 0.83%, or about 10 meters of water column. This volume will be released as a high kinetic energy jet instantaneously as de-compression to the atmosphere occurs.

" Structures & Equipments of the System "

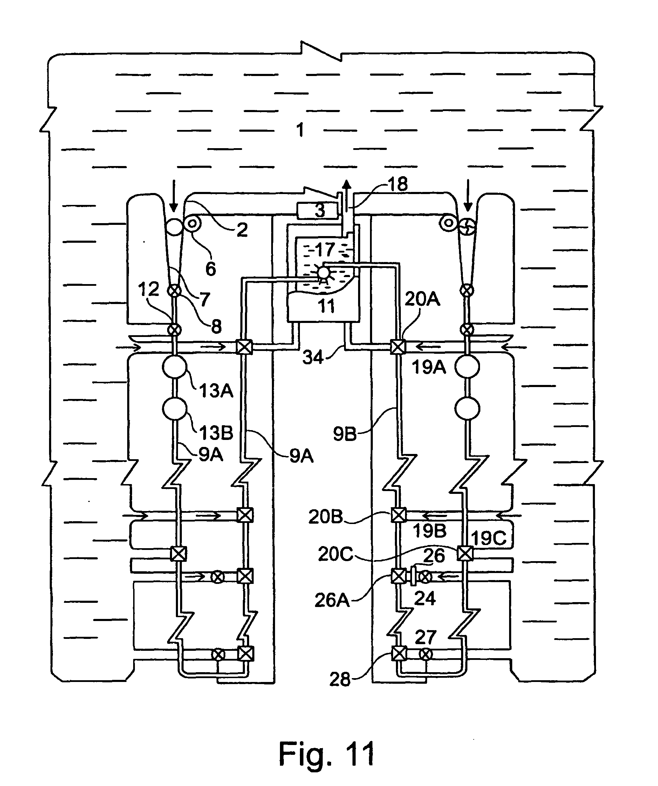

On Fig. 11 is a diagram of the plane view of the present system. It has the following structures and equipments :

A.    A main reservoir ( 1 ). A man made or natural body of water which surface area is wide enough to also serve as a cooling reservoir; it must have at least three meters of elevation head from the datum line;

B.    Rounded entrance conduit (2);

C.    Starting / re-boosting generator ( 3 ), it supplies the initial power to the pump ( 6 ) and the spherical valves ( 5 ), it also re-boost the energy level of the system as the energy output wanes over time;

D.    Main pump ( 6 ) provides the pressure head to the main penstock;

E.    Convergence pipe ( 7 );

F.    Gate valves ( 8 ), these valves control the water volume flowing into the main penstocks ( 9 );

G.    Two main penstocks( 9-A & 9-B ), each with about 1200 m. with one m. inside diameter that end about 10 m. high inside the powerhouse (11):

H.    Pressure relief valves ( 12) set on a water release pressure of about 10 meters above the pump energy head in order to protect the pump. Water hammer pressure surge that reaches this point collides with the pump pressure flow. That resultant upsurge in pressure would push open the pressure relief valve allowing the excess pressurized water to flow out of the main penstock and into the main reservoir ( 1 );

I.    Air cushioned surge tanks ( 13- A & 13- B ) absorb surge water from the main penstock during the high pressured compression and release water back to the main penstock during the low pressured expansion. On their tops are equipped with vacuum relief valves( 4 ) that are naturally closed to prevent the escape of air while allowing air to flow into the surge chambers during the low pressure expansion;

J.    Main uni-direction spherical valves ( 5 ) connected to the end of the main penstock ( 9 );

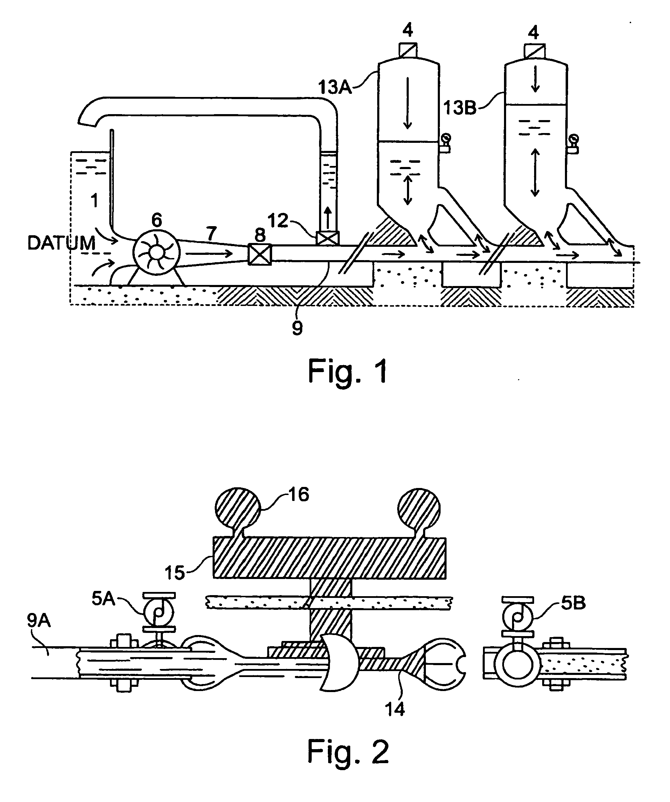

K.    A Pelton turbine ( 14 ) shown in Fig. 2 with a shaft that is coupled to the main generator (15 ) which has inertia flywheels ( 16 ) to store and to release back energy to the rotor to sustain the optimum speed;

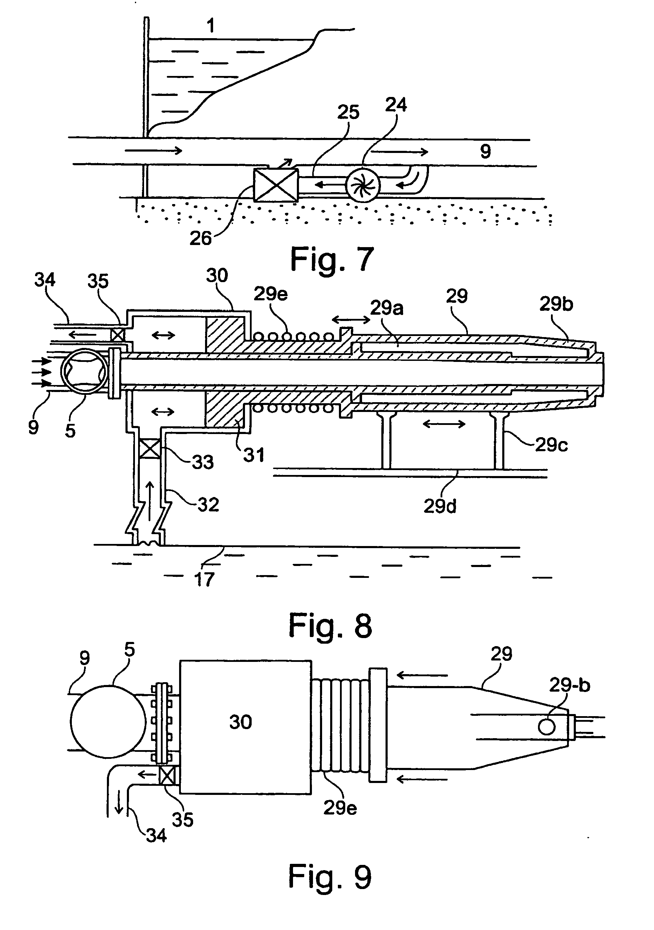

L.    A recoil nozzle (29 ) with a pressure chamber ( 30 ) attached to the spherical valve ( 5 ) as shown in Figs. 8 and 9. The nozzle has an air chamber ( 29-a ); an exhaust orifice ( 29-b ); mechanical spring ( 29- e ); support columns ( 29-c ); and guide rail ( 29-d );

M.    The pressure chamber ( 30 ) has a piston ( 31 ) that moves back and forth in synchrony with the released jet force; liquid is forced out into the pressure pipe ( 34 ) through a one way valve ( 35 ) during compression phase and liquid from tail reservoir is pulled in during vacuum decompression phase through the suction pipe ( 32 ), flow is controlled by a check valve ( 33 ); the chamber can be converted into a desalination tank where the salts and other solutes are removed by the reverse osmosis process by using semi-permeable membrane;

N.    A tail reservoir ( 17 ) inside the powerhouse; it receives spent water and drains it to the main reservoir ( 1 ) via the drain pipe ( 18 ) by gravitational flow;

O.    Water vacuum suction pipes ( 19-A ; 19-B &19-C ) to provide immediate water needed to stabilize the pressure in the main penstock. Water is sourced directly from the main reservoir ( 1 ). All have check valves (20-A; 20-B and 20-C) set below the main penstock ( 9 ) to prevent backflow. The drawn in volume from the suction pipes into the main penstock is based on the magnitude of the suction force. It is in accordance with the Principle of Conservation of Energy. That's when high pressure energy is transformed into a low pressured kinetic energy, vacuum is formed;

P.    Auxiliary pump ( 24 ) powered by an electric motor that will draw water from the main reservoir into the main penstock to provide the water volume needed for next water hammer;

Q.    Auxiliary pump line ( 25 ) connects the auxiliary pump to the main penstock; its inside diameter is one half that of the main penstock;

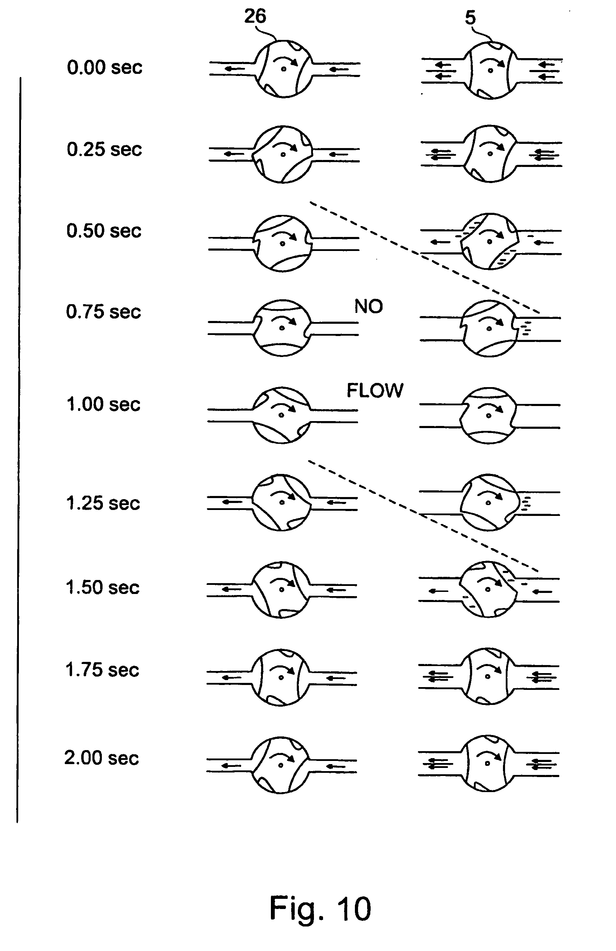

R.    Auxiliary spherical valve ( 26 ) controls the flow of water into the main penstock, its dimensions and rotating speed are similar to the main spherical valve ( 5 ), as shown in Fig. 10, both the auxiliary spherical valve ( 26 ) and the main spherical valve ( 5 ) are rotating in a relative positions in relation to time; it incorporates a check valve ( 26-A ) immediately downstream to prevent the water hammer pressure from dissipation;

S.    Re-boosting pump ( 27 ) re-energizes the system by adding power input periodically as the power output is waning, power source is the starting / re-boosting generator ( 3 ) which is outside of the closed energy loop;

T.    Check valve ( 28 ) on the entrance of re-boosting pipe to main penstock;

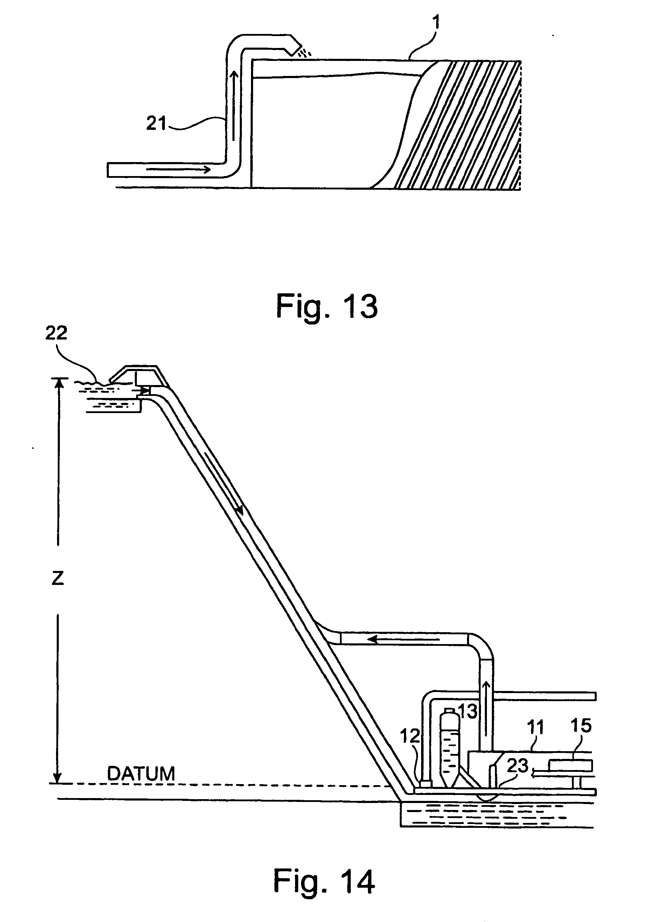

U.    A replenishment pipe ( 21 ) draws water from the nearby natural water source into the main reservoir to replace the evaporated water (Fig. 13);

V.    An upper reservoir ( 22 ) shown in Fig. 14 of the second embodiment of the present invention where the elevation head substitutes the pump pressure head of the first embodiment;

W.    Motor pump ( 23 ) for the delivery of water up to the upper reservoir (22) of the second embodiment in Fig. 14.

" The Flow Path of the Re-circulating Water in The System "

Fig. 11 shows water initially flows out from the main reservoir ( 1 ) into the entrance pipe ( 2 ). It gets a high pressure head from the main pump ( 6 ). Then it flows into the convergence pipe ( 7 ), passes by the gate valves ( 8 ) and into the main penstocks ( 9 ). The main penstock has a length of about 1200 meters. The water would flow by the pressure relief valve ( 12 ) and the two air surge chambers ( 13-A & 13-B ). These surge chambers provide spaces to absorb surge water during compression phase in the main penstock and release water back to it during the expansion phase. Water then flow forward on the long main penstock, passing by check valves ( 20-A ; 20-B & 20-C ) that control the entrance of water from the vacuum suction pipes ( 19-A ; 19-B & 19-C ). As the water flows to the end of the main penstock, it will meet the uni-direction spherical valves( 5-A & 5-B) in operation inside the powerhouse (11). These motorized spherical valves induce the water hammer pressures in the main penstocks and then releases the high kinetic energy jet through the recoil nozzle into the Pelton turbine-generator to generate electricity. The spent water now falls down into the tail reservoir ( 17 ) of the powerhouse ( 11 ). Water is now drained by gravitational force through the drain pipe ( 18 ) into the main reservoir ( 1 ), thereby COMPLETING THE WATER CIRCULATION LOOP.

The water vacuum suction pipes are connected to the main penstock. As the downstream water in the main penstock is jetted out in huge volume creating a low pressured vacuum which suction force will pull in water directly from the main reservoir ( 1 ) into the main penstock. Together with the water pumped in by the auxiliary pump ( 24 ) and the recoil forced pressure pipe ( 34 ) COMPLETES THE CIRCULATION OF WATER IN A COMPLEMENTARY SUB-LOOP — from the main reservoir through the vacuum suction pipes and the auxiliary pipe to the main penstock - turbine - tail water reservoir and back to the main reservoir ( 1 ) bypassing the main pump ( 6 ) and the upstream section of the main penstock.


" Operations of the Motorized Uni-Direction Spherical Valve "

In Fig. 2 is shown the two spherical valves ( 5-A and 5-B ) that rotate in a uni-direction mode ( the recoil nozzles are omitted for clarity ). It shows the horizontal Pelton turbine ( 14 ) with a vertical shaft coupled to the rotor of the main generator (15).

Valve 5-A is in a fully opened position while the valve 5-B is in the fully closed position. Both valves have the same dimensions and are operated by motors that rotate continually.

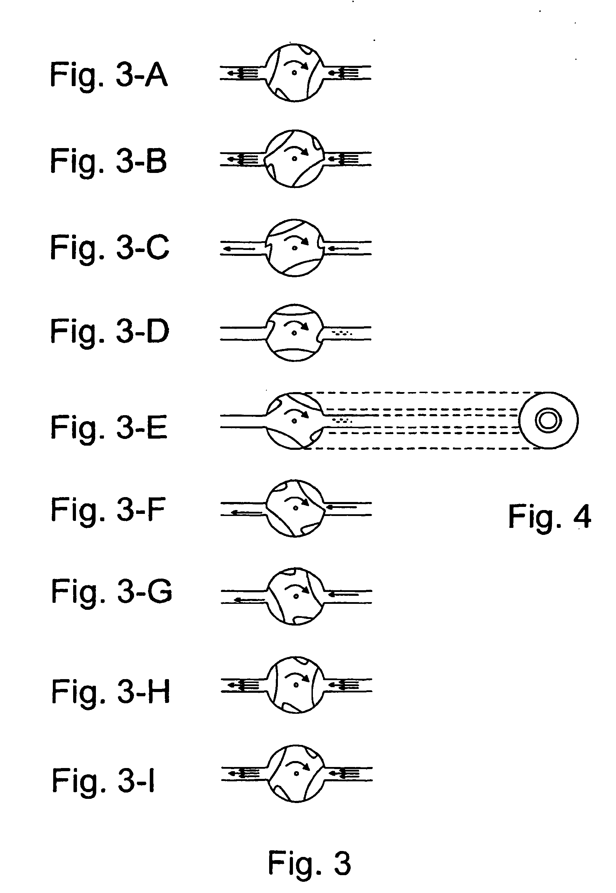

From Fig. 3-A to Fig. 3-I are shown the valve inner sphere having outlet or orifice that occupies one fourth of its circumference, as does the inlet orifice. In such a manner, it is at any time divided into four equal sections; two parts that would open up and two parts that would close the spherical valve down. The main penstock inside diameter is about one half the orifice diameter of the sphere.

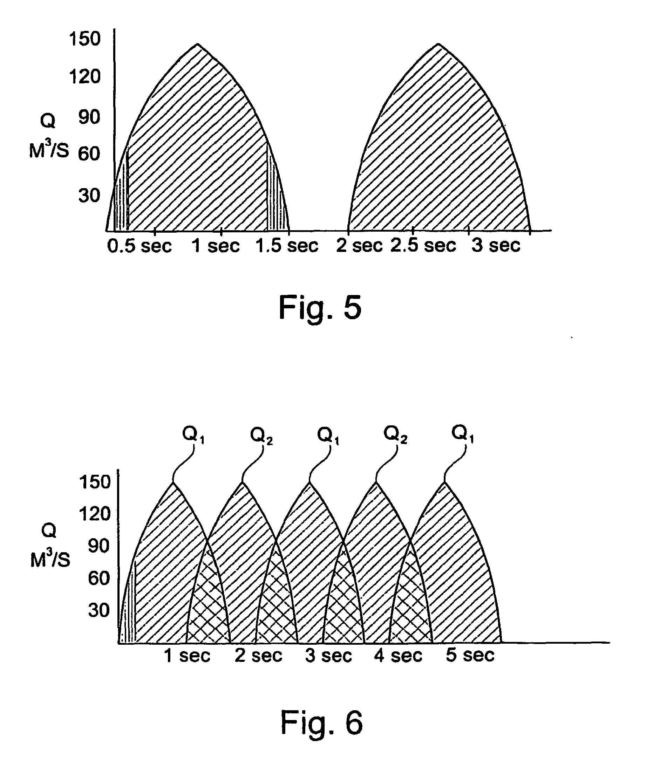

The valves are opened in one half second time interval ( Fig. 3-F to Fig. 3-H ) and stays open for the following one half second time interval ( Fig. 3-H to Fig. 3-I and Fig. 3-A to Fig. 3-B ). It closes in the next one half second time interval ( Fig. 3-B to Fig. 3-D ) and stays closed for the following one half second time interval ( Fig. 3-D to Fig. 3-F ). The two valve spheres have a frequency of one revolution per four seconds that make them 15 RPM valves. Their respective positions, i.e., opening and closing are timed to be one second apart as shown in Fig. 6 and Fig. 10. In Fig. 2, it shows that when valve 5-A is fully opened, valve 5-B is fully closed and vice-versa.

Figs. 3-A to 3-I show the sequence of the spherical valve in its movements. At both sides of the sphere are two " toy top "concaves. The concaves increase the surface area and torque of that section exposed to the increasing water hammer pressure as the valve closes and opens.

The formula relating force to pressure and area is:

$$F = P \times A$$

$$\text{Force} = \text{Pressure} \times \text{Area} \quad ; \quad n = n/m^2 \times m^2$$

As the formula indicates, area is directly proportional to the force. The bigger the exposed area, the greater force it could receive. This condition would create an unbalanced force on the sphere. That is, a greater force would exert on the portion with the concave depression than on the part without the depression. And this unbalanced force helps to increase the overall rotating torque of the spherical valve. Thus a calculated lesser capacity motor may be used.

Fig. 4 is the frontal view of the spherical valve showing the " toy top " depression on the sphere.

The valve should be made of very strong steel material that would withstand the constant adverse dynamic forces of the water hammers.

The rotor in the main generator ( 15 ) should possess enough mass that its moment of inertia ( $M \cdot R^2$ ) is sufficiently increased to compensate for the pulsating jet energy mode. Therefore it needs to install flywheels. ( 16 )

" Volume of the Compressed Water Column "

The formula for calculating the rate of compression $R_c$ of water under high pressure is: $R_c = - P/E_v$ where

P    is the applied pressure, unit is in kpa.

$E_v$    is the modulus elasticity of water. At 20° C, its $2.18 \times 10^6$ kpa.

In our specific penstock of 1200 meters in length and one meter in inside diameter. At 20 ° C , it is subjected to a pressure head of 1,850 meters or pressure units of $1,850 \times 9.81$ kn / m $^2$ = 18,148 kpa. The rate of compression of water is:

$$R_c = - P / E_v = - 18,148 \text{ kpa} / ( 2.18 \times 10^6 ) \text{ kpa}$$

$$= - 0.0083$$

The pressure of 18,148 kpa will compress the water by 0.83 %. To arrive at the compressed volume, we multiply the original volume by 0.83 % which is 1200 meters x 0.785 x 0.83 % = 7.82 m $^3$ . The length of the water column is shrunk by 7.82 m$^3$ / 0.785 m $^2$ = 9.96 METERS. The more compressed the water column, the shorter is its length and the higher is its stored ELASTIC POTENTIAL ENERGY. This elastic potential energy is converted from the latent kinetic energy in the inter-molecular spaces.

" Modified Pressure Wave Velocity "

AT 20° C, the speed of the pressure wave in water is 1,478 m/s. However, in an elastic pipe, it is modified by the stretching of the pipe walls. In general, the thicker the steel, the higher is the celerity. In this illustration, it is modified by steel material and its thickness of 15 cm.. Using the modified pressure wave MWp formula:

$$MWp = Wp \{ 1 / [ 1 + (Ev / E)(D/t) ] \}^{1/2}$$

where

Wp    is the water pressure wave velocity at 20 ° C.

Ev    is the modulus of elasticity of water which is $2.18 \times 10^6$ kn•m$^{-2}$

E    is the bulk modulus of the pipe material. For steel, it is about $207 \times 10^6$ kn • m $^{-2}$ .

D    is the inside diameter of the pipe which in this case is one meter.

t    is the thickness of the pipe which in this case is 0.15 meter.

Then :

$$MWp = Wp \{1/1 + [(2.18 \times 10^6)/(207 \times 10^6)] \times [1/0.15]\}^{1/2}$$

$$= 1478 \{1/(1+0.07)\}^{1/2}$$

$$= 1428.8 \ m/s$$

The pressure wave in this specific pipe with water temperature at 20 ° C is 1428.8 m/s.

" Calculated Performance of the System (without the recoil force input)"

By using a 260 meter head pump, the energy equation of the flow inside the one meter ( inside diameter ) main penstock that ends in a 10 meter high orifice is:

$$260 = v^2 / 2g + H_{TL} + 10$$

the head lost is about 30.8 times the velocity head, thus:

$$260 = ( 1 + 30.8 ) \ v^2 / 2g + 10$$

and v = 12.66 m/s
This is the steady state flow rate and the discharge is 9.93 $m^3$ / s.
The water hammer pressure when the spherical valve is "rapidly closed " in one half second time interval is :

$$P_h = D_m V W_p = ( 1000 )( 12.66 )( 1428 )$$

$$= 18,087 \ kpa$$

In term of pressure head , it is 18,087/ 9.81 = 1,842 meters.
From a steady flow velocity head of 8.17 meters, the rapid closure of the spherical valve rams up the energy head to 1,850 meters ( 1842 plus 8.17 ) high of pressure head. In a 1/2 second time, the spherical valve rotates to a fully opened position. In the next full 1/2 sec. time, the valve is fully opened releasing a high kinetic energy jet to impinge on the Pelton turbine-generator. Then the sphere rotates to close in the next 1/2 sec. time interval. This release of water jet is simultaneous with the abrupt decrease of pressure head in the penstock.
In Fig. 5 shows the projected chart of the water discharge. At T=0 sec., the valve is closed, water is not flowing and the water hammer pressure inside the penstock is 1,850 meters. Then in the next 1/2 sec., the valve opens fully. At the time interval of T=0 sec. to T=0.75 sec., the pressure head is dropping rapidly. The assumed head would be about 1,600 meters at the instant T=0.75 sec. It should be noted that it is not anymore the pressure head of 1,850 meters.
The velocity head H of water jet has the equation :

$$H = V^2 / 2g$$

$$Then \ velocity = [ ( 2g ) H ]^{1/2} \ ,$$

Assuming the instantaneous head is 1,600 meters at T=0.75 sec.
then: $V_{inst} = [\ 2g\ (\ 1600\ )\ ]^{1/2}$ = 177 m/s.
The equation for instantaneous discharge at T=0.75 sec.:

$$Q_{inst} = A\ V_{inst}$$

where

A    is the area of the pipe opening, unit is in $m^2$
$V_{inst}$   is the instantaneous velocity, unit is in m/s.

For the given area and the instantaneous velocity of 177 m/s, the instantaneous discharge is :

$$Q_{inst} = (\ 1\ )^2\ (\ \P\ /\ 4\ )\ (\ 177\ ) = 0.785\ (\ 177\ )$$

$$= 139\ m^3\ /sec$$

The projected single water discharge would approximate the curve of the equation:

$$Y = 139\ (\ 2.66\ X - 1.77\ X^2\ ) \qquad\qquad Given : [\ 0 \le X \le 1.5\ ]$$

where

Y    is the water discharge volume.

X    is the time in seconds.

Fig. 5 charts this relationship.
For the second from T=0.25 sec. to T=1.25 sec., the discharge is highest and its power is greatest. By using integration to measure this water discharge Q:

$$\int_{0.25}^{1.25} 139\ (\ 2.66X - 1.77X^2\ )\ dX\ =\ 139\ \left(\ 1.33\ X^2 - \frac{1.77\ X^3}{3}\ \right)\ \Big[_{0.25}^{1.25}$$

$$Q\ =\ 118.43\ m^3\ /sec$$

From the equation of discharge, we solve for the average velocity:

$$V_{ave} = Q\ /\ A\ =\ 118.43\ /\ 0.785\ = 150.86\ m/s$$

Thus the average velocity head from T= 0.25 sec. to T= 1.25 sec. is

$$150.86^2 / 2g = 1{,}160 \text{ meters}$$

To arrive at the approximate hydrodynamic power of the jet from T=0.25sec to T= 1.25 sec. , we use the formula for power:

$$\text{Hydrodynamic power} = Q\, W_{sp}\, H_{ave} / 1000 \quad ;$$

where

$Q$      is the discharge in one second, unit is in $m^3/s$.
$W_{sp}$      is the specific weight of water, unit is in newtons / $m^3$.
$H_{ave}$      is the average head of the water jet, unit is in meters.

Hence,

$$\text{power}_{t=0.25\text{ to }t=1.25} = 118.43\,(9810)\,(1160) / 1000$$

$$= 1{,}347{,}680 \text{ kw or } 1347.68 \text{ MW.}$$

If we calculate the power from the KINETIC ENERGY approach, we would have come up with the following equation :

$$K.\,E. = 1/2\ m\,v^2$$

where

$m$      is the mass of the water jet, unit is in kg. For 118.43 $m^3$, the mass is 118,430 kilograms.
     $v$ is the mean velocity of the water jet, In this case, it is 150.86 m/s

Hence :

$$K.\,E. = 1/2\ (118{,}430)\,(150.86^2) = 1{,}347{,}667 \text{ kn} \cdot \text{m}$$

This kinetic energy of 1,347,667 kn•m is released in one second time, making the term 1,347,667 kn•m / sec. Since kn•m / sec. is equivalent to the term kw, therefore the power of 1,347 MW is equal to the 1,347 MW we arrived at by using the hydrodynamic power equation.
Assuming an 80% efficiency turbine-generator, then the power generated.is 1347.68 x 80 % = 1064.8 MW.
As shown in Fig. 6, this discharged power is produced in 1.5 seconds time interval by a single main penstock. Therefore, in theory, the power produced by two main penstocks in one sec. time is ( 2 x 1347 ) / 2.5 = 1077 MW. If only one single main penstock is utilized, then theoretically, the power is about 538 MW.
This generated power is sustained by other natural forces, i.e., vacuum suction force ; the jet recoil force; gravitational force ; compressed air; inertia; and atmospheric air pressure PLUS the pressures from the auxiliary pump and the periodic re-boosting pump that are channeled into the system.

" Power Needed By the Pumps in the System "

The power required by one single pump ( 6 ) to give it a 260 meters head in steady state flow is :

$$P_{pump} = 9.93 \; ( \, 9810 \, ) \; ( \, 260 \, ) / \; 1000 \; = \; 25.33 \; MW$$

Assuming an efficiency of 80 % for the pump, then the power required is 31.66 MW.

Two pumps working simultaneously would require 63.32 MW of power.

" The Jet Recoil Force "

The jet recoil force which is EQUAL and OPPOSITE in direction to the force of the released jet can be utilized to do different kinds of works. Primarily: ( A ) it can be transferred to the main penstock ( 9 ) as added pressure power; other methods can be used, such as ( B ) to drive a reciprocating linear to continuous rotary motion assembly which rotating element is coupled to the rotor of a generator to produce electricity; and ( C ) to provide pressure force to a desalination tank where salts and solutes are removed by way of filtration membrane.

The force of the jet from T= 0.25 sec. to T= 1.25 sec. is:

$$Force = Dm \; Q \; V;$$

where

Dm     is the liquid mass density, unit is in $kg/m^3$.
Q       is the discharge, unit is in $m^3/sec$.
V       is the velocity of the liquid flow, unit is in m/s.

Then: F= 1000(118)(150)= 17700 kn. This is the force of the jet, it is also the recoil force on the convergence nozzle.

(A). If a volume of 20 cubic meter of water is designed to be pumped into the main penstock, the discharge calculations are: ( neglecting frictional head loss)

$$Q = A_{pipe} \; x \; V_{pipe} = A_{chamber} \; x \; V_{chamber} \; = 20 \; m^3/s$$

With the pipe having area of 0.785 $m^2$ ( 1 m. inside diameter) and velocity of about 25.4 m/s; while in the chamber the velocity is 2 m/s. Then the area of the cylindrical chamber have to be 10 $m^2$ with a diameter of about 3.5 meters.

$$Q = 0.785 \; x \; 25.4 = 10 \; x \; 2 = 20 \; m^3/s$$

The pressure inside the chamber is P = F / A = 17700/10 = 1770 kpa. The pressure head is 1770/9.81 ≈ 177 meters. The velocity head of the pressure pipe ( 34 ) is calculated as:

$$V^2_{pipe}/2g = ( \, D_{cham}/ \, D_{pipe} \, )^4 \; V^2_{cham}/2g = ( \, 3.5/1)^4 \, 0.2 \; \approx 30 \, meters.$$

The Bernoulli continuity equation would show the following: ( the pipe $H_{loss}$ is about 2 x $v^2_{pipe}$ / 2g )

$$V^2_{ch} / 2g + P_{ch}/ W_{sp} + \text{elevation head} = V^2_{pipe} / 2g + P_{pipe}/ W_{sp} + h_{loss}$$

Then :

$$0.2\,m + 177\,m + 10\,m \approx 30m + 97.22\,m + 2(\,30\,)m$$

$$\text{The power is} = QW_{sp}\,H / 1000 = 20 \times 9.81 \times 30 \approx 6000\,kw.$$

(B). The recoil force is used to generate electricity. It drives a reciprocating linear to continuous rotary assembly where the rotating element is coupled to the rotor of the generator to produce electricity.

The net length of the piston is one meter. velocity is one m/s. The recoil force of 17700 kn. can generate about 15000 kn m/s or 15 MW of power.

That is after deducting the force needed for the compression of the spring and overcoming the inertia of the nozzle assembly.

(C). The pressure to desalinate seawater is about 8000 kpa. The membraned area for extracting fresh water is: Area = force / pressure = 17000 / 8000 = 2.2 $m^2$. The inside diameter of the desalination tank is = $(2.2 / 0.785\,)^{1/2}$ = 1.67 meters.

Another embodiment of the recoil force assembly is to use the uni-directional spherical valve ( 5 ) directly as the recoil assembly. Without the convergence nozzle, this assembly has all the above mentioned parts with the same functions, such as the pressure chamber; piston; spring; pressure pipe and its check valve; vacuum suction pipe and its check valve; air chamber; air relief orifice, steel column and guide rail.

" Water Replenishment of the System "

As shown in Fig. 13, on a periodic basis, the water replenishment pipe (21) draws in water from the natural source nearby to replenish the loss of water due to evaporation. This is done by flowing water into the main reservoir of the system.

The main reservoir ( 1 ) is of sufficient capacity to also serve as a cooling reservoir and is set up outside the powerhouse. It could be a natural body of water. The cooling system serves to cool the heated water that flow through the main penstock ( 9 ), the turbine, the transformer and other equipments. This system uses cooler atmospheric moving air as the main cooling agent. The heated water is carried out of the powerhouse together with the spent water in the tail reservoir through the outflow pipe ( 18 ) to the main reservoir that is exposed to the atmospheric air for dissipation. The temperature of the cooling reservoir has to be monitored to prevent it from getting too high. In case of high temperature, other cooling methods may be applied.

" Second Embodiment of the Present Invention "

The present invention has a second embodiment as shown in Fig. 14 wherein the force of pressure head provided by the main pump ( 6 ) in Fig. 11 is being substituted by the force of elevation head from an upper reservoir ( 22 ) on top of a mountain plateau as shown in Fig. 14 ; the elevation head Z minus the down flow pipe frictional head loss is equal to the pressure head of the pump ; while the other equipments and structures of the second embodiment system are identical in dimensions and functions to the first embodiment system as presented.

This second embodiment system has a motor pump ( 23 ) connected to the tail reservoir to deliver water from the lower level up to the upper reservoir ( 22 ) for re-circulation. It also has a low level reservoir similar to the main reservoir of the original embodiment outside the powerhouse to dissipate heat and to supply water to the vacuum suction pipes; auxiliary pump pipe line and re-boosting pipe line.

The two embodiments of the present invention would have the same gross power output.

The present hydropower system would have the following chart of Energy / Mass equilibrium wherein the Energy / Mass inputs must be equal to the sum of the Energy Output plus the Energy / Mass losses:

| | | CONVERTIBLE ENERGY / MASS INPUTS = | Energy OUTPUT + | Energy / Mass LOSSES |
|---|---|---|---|---|
| A) | | Gravitational force induced elevation heads of the main reservoir and the tail reservoir and specific weight of water at about 9810 n/m$^3$. | a.Generated electrical energy of at least 50 MWh | a. Frictional head loss |
| B) | | Velocity head of about 1200 m. jet released from converted water hammer pressure that involves the converted latent kinetic energy of the atmospheric liquid. | | b. Energy loss as heat |
| C ) | | Vacuum suction force formed after sudden huge discharge in the main penstock pulling in volume of water directly from the main reservoir, that operates on the Principle of Conservation of Energy. | | c. Pipe wall expansion energy loss<br>d. Machineries efficiency loss |
| D ) | | Recoil force of the jet. | | |
| E) | | Compressed air pressure energy inside the surge tanks worked by the surging water during the compression phase. | | e. Evaporation of water molecules |
| F) | | Atmospheric air pressure of 10.3 meters of water that pushes into the surge tanks during the de-compression phase. | | |
| G) | | Rotation inertial force of the rotor in motion. | | |
| H) | | Mechanical force of electric motors, used in the main pump; the auxiliary pump; the periodic re-boosting pump and the uni-direction spherical valves. | | |
| I ) | | Mass of water added to the main reservoir as needed through the replenishment pipe. | | |

The present invention is intended to be used as a base load generator.

Whenever there is a decrease in the load demands, the excess capacity may be diverted to any other purposes within the powerhouse area, or we may opt to lower the rotating speed of the main motor pump ( 6 ), so as to decrease the velocity head in the main penstock ( 9 ), thus a lower water hammer pressure, producing subsequently a lower level of power.

The present invention can be constructed as an independent power producing unit or it can be built as a sub-generation plant of an existing power plant.

The above embodiments are given for illustration purposes only. And not by way of limitations and that modifications will become evident to those skilled in the arts which fall within the scope of the claims.

**Claims**

**1.**   A hydro-electric system comprising:

a body of water in a main reservoir (1) on ground level, being a man-made or

a natural body of fresh or saline water having at least three meters of elevation head from the datum line;

a rounded entrance conduit (2);

a main pump (6) that pushes the steady state flow inside the down-stream main penstock (9) powered by a variable speed motor;

a convergence pipe (7);

a gate valve (8) controls the flow of water into the main penstock (9);

a thick main penstock (9) of about 1200m that ends high up inside the powerhouse (11) with a steady state discharge of at least 10m/s or velocity head of-five meters, its inside diameter is at least 0,3 to 1 m with a thickness of about 15% of inside diameter being made of strong material such as seamless carbon steel; wherein its inner surface is coated with a thick layer of smooth and strong maternal which can be re-coated as needed when heavy cavitations or corrosion occur; wherein its center line serves as the datum line, having many expansion joints along its length;

a pressure relief valve (12) on top of the main penstock a few meters after the gate valve to protect the pump (6) from residual surge pressure;

wherein water relieved is flowed out of the main penstock (9) into the main reservoir;

a series of surge tanks (13-A, 13-B) absorbing surge water from the main penstock during high pressured compression and release water back to the main penstock during low pressured expansion, the tanks being fitted with one way pressure relief valves that are normally closed to trap air to form the air compression force during the high pressured compression while allowing atmospheric pressured air to be drawn into the surge tanks during the low pressured expansion;

a uni-direction spherical valve (5), connected to the end of the main penstock structured like a ball valve with a through bore that revolves 360° on its axis continuously in a single direction, having a round closure element with matching round seat that permits uniform sealing stress, the through bore on the sphere dividing the periphery into four parts, two parts opening up the main penstock and the other two parts closing it down; wherein on the sphere are two opposite toy top shaped concaves on its rotating plane increasing the rotational torque, being powered by a motor with a shaft that revolves the closure element continuously converting the combined kinetic pressure and elastic energy accumulated in the entire water column mostly into a water hammer of at least 1400m of pressure energy, the valve re-opening at subsequent moment and re-converting the pressure energy into a high kinetic energy-water jet, the valve being designed to rotate at about four seconds per revolution with its opening phase being timed to exhaust the water hammer pressure back to the initial lower velocity head; wherein the sphere orifice diameter is 2 times that of the inside diameter of the main penstock being strongly anchored with sufficient counter mass;

a convergence recoil nozzle (29) attached to the downstream of the valve (5); a Pelton turbine-generator (14, 15) which buckets are impinged by the kinetic energy- jet emanating from the main penstock;

a shaft coupling the turbine to a main generator (15) to produce electrical energy, also having flywheels attached to store and to release mechanical energy to the rotor in order to sustain an optimum speed, its capacity being at least 50MW and more;

a tail reservoir (17) receiving the spent water inside the powerhouse (11);

a drain pipe (18) draining spent water back to the main reservoir (1) and out of the powerhouse by gravitational force;

a series of vacuum suction pipes (19-A; 19-B, 19-C) connecting the main reservoir (1) to the main penstock (9); wherein each suction pipe has a diameter that is about the size of the main penstock, their water source being the main reservoir (1) pulling in an immediate volume of water needed for the main penstock by the pressure differential being due to the higher pressure from at least 3m of elevation head plus the atmospheric pressure of 10,3m of water as against the low pressured partial vacuum created by the sudden expulsion of high pressured water jet; wherein the expulsion converts the hammer pressure head into velocity head with the subsequent precipitous drop of pressure inside the penstock (9) to a low pressured partial vacuum; wherein water transfer is controlled by one way valves (20-A; 20-B, 20-C) placed below the penstock (9);

an auxiliary pump (24) that will bring water from the main reservoir (1) into the main penstock (9) to complete enough volume of at least five meters pressure head-water needed for next round of water hammer;

an auxiliary pump line (25) that connects the auxiliary pump (24) to the main penstock, its inside diameter being one half the diameter of the main penstock;

an auxiliary uni-direction spherical valve (26) having the same dimensions and rotation speed as the main spherical valve (5) controlling the flow of water into the main penstock having a check valve (26-A) downstream to prevent water hammer pressure dissipation; wherein both, the two spherical valves (5, 26) having their relative positions as a function of time;

a starting/re-boosting generator (3) to start and to run initially the pumps (6; 24; 27) and the initial rotation of the spherical valves, also functioning as a re-boost input to be added to the system;
a re-boosting pump (27) re-energizing the system periodically by adding input to sustain the level of energy needed;
a replenishment pipe (21) bringing in water from nearby natural source to replace the water lost to evaporation, this is done as needed to keep the elevation head constant.

2. A hydro-electric system of claim 1 which features an intentional repetition of induced water hammer pressure mode with the rapid closure of the spherical valve (5), combining the kinetic and pressure energy, plus the elastic potential energy which is converted from the pool of latent kinetic energy in the inter-molecular spaces of atmospheric water; these are transformed mostly into a high water hammer pressure; its value is the product of its density multiplies by its velocity and its celerity; it is based on the Principle of Conservation of Energy and on the physical properties of water such as its specific weight and its Volume Modulus of Elasticity $E_v$, producing a celerity of about 1428m/s with equation

$$Wp = [(g \,/\, Wsp)\, E_v]^{1/2} \;;$$

from a steady flow velocity head of at least five meters, it is transformed and accumulates up to at least 1400m high pressure head, subsequent rapid opening of the same valve re-transforms the pressure head into a high kinetic energy water jet that burst out of the penstock to impinge on the buckets of the Pelton turbine-generator to produce electric power; the spherical valves are strongly anchored with sufficient counter mass.

3. A hydro-electric system of claim 1 which features a vacuum suction force upstream of the spherical valve; this after the sudden expulsion of high compressed water jet from the main penstock (9), this sudden conversion of pressure energy into kinetic energy causes a precipitous drop of pressure into a low pressured partial vacuum inside the main penstock; thus a pressure differential with the higher pressure coming from the elevation head of at least 3m plus the atmospheric pressure of 10,3m of water force pull in a volume of water as it rapidly seeks pressure equilibrium in the main penstock; this operation is based on the Principle of Conservation of Energy, i.e., when liquid pressure energy is converted into liquid kinetic energy, there exists an associated pressure drop much like the process in the narrow neck of a Venturi tube; this pressure drop entrains a secondary liquid transfer from the main reservoir into the main penstock; as the valves open to rush in water seeking a pressure equilibrium; it also provide much needed water to the main penstock to sustain the next cycle of water hammer; this induced physical water transfer mechanism by the suction force functions like the action of a motor pump but without any input of electrical power; this suction force is caused mainly by the atmospheric air pressure and elevation head coming from the main reservoir.

4. A hydro-electric system of claim 1 which features an auxiliary pump (24) powered by an electric motor that will draw water from the main reservoir (1) into the main penstock (9) to provide additional water volume and pressure needed for the next water hammer.

5. A hydro-electric system of claim 1 which features an auxiliary pump line (25) that connects the auxiliary pump (24) to the main penstock; its inside diameter is one half that of the main penstock.

6. A hydro-electric system of claim 1 which features an auxiliary uni-direction spherical valve (26) that has the same dimensions and rotation speed as the main spherical valve (5); both spherical valves rotate in a manner such that the water flow through the auxiliary spherical valve (26) is a short moment before the opening phase of the main spherical valve (5); and the closure of the auxiliary valve is also in advance of the closure of the main spherical valve to prevent the dissipation of the positive water hammer pressure.

7. A hydro-electric system of claim 1 which features a convergence recoil nozzle (29); it is attached to the outflow side of the spherical valve (5); the recoil force of the jet pushes a piston rod (31) to do work.

8. A hydro-electric system of claim 7 where the recoil piston is inside the pressure chamber (30) forcing liquid into the pressure pipe (34) to do work; it is supported by columns (29-c) that move it along guide rails (29-d), it has a mechanical spring (29-e) to store energy during compression and is used to push the nozzle back to the original position; it also has an air relief orifice (29-b) that allows air to move freely in and out of the air chamber (29-a) during operations.

9. A hydro-electric system of claim 8 where the pressure chamber (30) has an inlet vacuum suction pipe (32) that pulls water from the tail reservoir (17) during low pressured expansion and an outlet pressure pipe (34) that provides pressurized liquid during compression to do work; both pipes(32, 34) are controlled separately by check valves (33, 35).

10. A hydro-electric system of claim 8 where the compressed liquid from the pressure pipe (34) works as an added pressure force to the main penstock (9) plus adding more water volume to the main penstock.

11. A hydro-electric system of claim 7 where the reciprocating piston (31) drives a linear to continuous rotary assembly where the rotating element is coupled to the rotor of a generator to produce electricity.

12. A hydro-electric system of claim 7 where the piston drives a pressure force into a desalination tank where salts and solutes are removed by filtration membrane.

13. A hydro-electric system of one of claims 1 to 12 where the uni-direction spherical valve (5) is the recoiling assembly; doing without the convergence recoil nozzle; this assembly is complete with all the accessories with functions similar to those mentioned such as the pressure chamber; piston rod; outlet pressure pipe; inlet suction pipe; spring; air chamber; air relief orifice; columns and rail guide.

14. A hydro-electric system of claim 1 which features a series of surge tanks situated near the beginning upstream of the main penstock and are fitted with one way valves (4) that are normally closed at its top, this to accumulate compressed air pressure as the surging level of high pressured water pushes up to the upper part of the tanks during the water hammer formation phase; this stored energy is released as pressure force into the main penstock flow during the de-compression phase; this compressed air presents a physical liquid-gas interface dynamic force that does not consume electric energy; furthermore, as the pressure inside the tanks drops below the existing atmospheric pressure, the one way valve will open to rush in atmospheric pressure air that pushes down further the water level in the tanks, leading the water pressure into the main penstock flow, without consuming any electric energy.

15. A hydro-electric system of claim 1 which features a Pelton turbine-generators with capacity ranging from 50MW and more, have inertia flywheels having substantial mass to store and to release back mechanical force so as to even out the pulsating mode of jet force, this to sustain the optimum frequency of the rotor; thus a rotational force is conserved by inertia and released to the consuming rotating rotor without using any electrical energy.

16. A hydro-electric system of claim 1 which features a variable speed motor pump (6) having pressure head at a range of 130m to 400m and up with motor power of sufficient capacity; upon starting, it needs to accumulate about one minute of the water flowing energy to establish a steady state flow velocity head of at least 5m in the main penstock, together with the hydraulic gradient pressure energy head serve as the initial primary force of the system for water hammer pressure and sets the process of power conversions to proceed.

17. A hydro-electric system of one of claims 1 to 16 that will form a distinctive energy comprising various forms of energy inputs and a single consolidated form of energy output as electricity.

18. A hydro-electric system of one of claims 1 to 17 which features a starting/re-boosting generator (3); this can be substituted by an existing utility power source; it is the source of the initial input of power for the main pump and the spherical valve; its power line will be closed upon the switch on of the main generator (15); as with any moving energy system subjected to dissipative frictions and gravity, energy loses may reach a point where re-boosting the energy level is needed; periodically, the energy of the system need to be given a boost by an out of the energy loop re-boosting pump (27) powered by electric energy from this re-boosting generator; this is to restore the energy output level.

19. A hydro-electric system of one of claims 1 to 18 that features a second main penstock having the same equipments of the same dimensions with similar functions and is arranged in opposite direction to the other main penstock.

20. A hydro-electric system of one of claims 1 to 19 that features the two oppositely-sited spherical valves moving in an alternating manner and in a rotational mode of storing and releasing water hammered jets to keep the Pelton turbine-generator running at optimum power.

21. A hydro-electric system of one of claims 1 to 20 which features a stream of convertible energy inputs comprising eight forms of force: among them only one form of force would require a substantial amount of electric energy- that being (a) the pressure heads of motor pumps; while the other seven forms of force being natural; physical and air-liquid interface dynamics induced forces and conversions; (b) the gravitational force induced elevation heads in the main reservoir and in the tail reservoir and which also induced the atmospheric pressure head of 10,3m of water and the specific weight of the water medium; (c) the velocity head of the water jet released from the main penstock converted from high water hammer pressure induced by the rapid closure of the spherical valve; (d) the induced vacuum suction force after the sudden huge expulsion of water jet, the partial vacuum state is created that would force higher pressured water to rush into lower pressured area; (e) the equal and opposite in direction recoil force produced by the ejecting jet as according to Newton's third law of motion; (f) the accumulated compressed air pressures in the surge tanks during high compression phase; (g) the prevailing atmospheric air pressure that pushes down into the surge tanks during low pressured expansion phase; (h) the rotational inertia force of the rotor in motion.

22. A hydro-electric system of one of claims 1 to 21 that can be expressed as an energy/mass equilibrium wherein the convertible Energy Bundles/Mass inputs must be equal to the Energy output plus the Energy/Mass Losses; the convertible energy/mass inputs consist of : a) gravitational force induced elevation heads of the main reservoir and the tail reservoir; b ) velocity head of about 1200m jet released from converted water hammer pressure that involves the converted latent kinetic energy of the atmospheric liquid; c) vacuum suction force formed after sudden huge discharge in the main penstock pulling in volume of water directly from the main reservoir; d ) recoil force of the jet; e ) compressed air pressure energy inside the surge tanks worked by the surging water during the compression phase; f) atmospheric air pressure of 10,3m of water that pushes into the surge tanks during the de-compression phase; g) rotation inertial force of the rotor in motion; h) mechanical force of electric motors, i.e. main pump; the auxiliary pump; the periodic re-boosting pump and the uni-direction spherical valves; i) mass of water added to the main reservoir as needed through the replenishment pipe; the energy output is the generated electrical energy of at least 50MWh; the energy/mass losses consist of : a) frictional head loss; b) energy loss as heat; c) pipe wall expansion energy loss; d) machineries efficiency loss; e) evaporation of water molecules.

23. A hydro-electric system of one of claims 1 to 22 which features a single consolidated output of energy that is more than the single form energy input which is the mechanical force of the motor pumps (6 ;24 ;27) ; the principle of this power conversion can be compared to a wind turbine electric generation system wherein the single power input is the nature's wind force and the single output is the electrical energy; whereas in this present power conversion system, the multiple inputs are also mostly natural forces working in tandem with a single form of electric based power input and the output being the single consolidated electrical energy; this electricity generation system is not based solely on one form of energy input, but a multitude of energy inputs which are mostly natural forces producing a single consolidated electric energy output bigger than the only one form of electric energy based motor power input.

24. A hydro-electric system of one of claims 1 to 23 which features a closed loop of flow path: from a ground level reservoir (1) with at least 3m of elevation head , water is given a boost in pressure head by a main motor pump (6) to push forward into a 1200m long main penstock (9),passing by pressure relief valve (12), surge tanks(13-A, 13-B), vacuum suction pipes (19-A; 19-B, 19-C), pressure re-boosting pipes and ends with motorized uni-direction spherical valve (5) high up inside the powerhouse (11); the continuously rotating spherical valve stops the fast water column in a rapid closure mode, transforming the combined kinetic pressure and elastic energy in the entire water column mostly into a water hammer of immense pressure energy; as the spherical valve opens, pressurized water is re-transformed into a high kinetic energy jet that shoots out of the main penstock (9) to impinge on the Pelton turbine-generator to generate electrical power; the spent water now falls into the tail reservoir ( 17 ) ; from the tail reservoir, water is drained by gravitational force through the outflow pipe (18) back to the original main reservoir (1 ; and the cycle continues .

25. A hydro-electric system of one of claims 1 to 24 that features a complementary sub-loop of water path: when the uni-directional spherical valve (5) is opened, huge volume of water jets out of the main penstock(9), and a vacuum suction force is formed that would pull in water from the main reservoir (1) directly into the main penstock (9) through the vacuum suction pipes (19-A; 19-B, 19-C) bypassing the main pump and the rest of the upstream main penstock; supported by the water from the pressure pipe (34) and the water from the auxiliary pump line (25), the full volume of water is flowed on to the Pelton turbine-generator and then tail reservoir in the powerhouse, and flows out by gravitational force back to the main reservoir (1); and the cycle continues.

26. A hydro-electric system as stated in one of claims 1 to 25 which features a second embodiment wherein the force of pressure head provided by the main pump ( 6 ) in is being substituted by the force of elevation head (derived from gravitational force) from an upper reservoir (22) on top of a mountain plateau; the other equipments and structures of the system are identical in dimensions and functions to the first embodiment.

27. A hydro-electric system of one of claims 1 to 26 which features a motor pump (23) that will deliver water from the lower level up to the upper reservoir (22) for used as elevation head for re-circulation.

28. A hydro-electric system of one of claims 1 to 27 wherein the liquid used is not water but other liquid such as oil, elemental mercury or others; for such liquids, the penstocks should be re-sized to suit their respective sets of density; volume modulus of elasticity; viscosity and vapor pressure.

**Patentansprüche**

1. Ein hydroelektrisches System, umfassend:

eine Wassermasse in einem Hauptreservoir (1) auf Bodenlevel, die eine künstliche oder natürliche Wassermasse aus Süß- oder Salzwasser ist, die mindestens drei Meter Fallhöhe von der Bezugslinie hat;
einen gerundeten Eingangskanal (2);
eine Hauptpumpe (6), die den stetigen Fluss in die nachgelagerte Druckrohrhauptleitung (9) drückt, und die durch einen variablen Geschwindigkeitsmotor angetrieben wird;
ein Konvergenzrohr (7);
ein Eintrittsventil (8), welches den Wasserfluss in die Druckrohrhauptleitung (9) steuert;
eine dicke Druckrohrhauptleitung (9) von ungefähr 1200 m, die hoch oben innerhalb des Kraftwerks (11) mit einem stetigen Ausfluss von zumindest 10 m/s oder einer Geschwindigkeitshöhe von 5 Metern endet, und deren Innendurchmesser zumindest 0,3 m bis 1 m mit einer Dicke von ungefähr 15 % des Innendurchmessers beträgt und aus einem starken Material, wie einem nahtlosen Karbonstahl, hergestellt ist, wobei ihre innere Oberfläche mit einer dicken Schicht aus einem glatten und starken Material beschichtet ist, welche nötigenfalls wieder beschichtet werden kann, wenn große Hohlräume oder Korrosion auftreten, wobei ihre Mittellinie als Bezugslinie mit einigen Dehnungsfugen entlang ihrer Länge dient;
ein Druckablassventil (12) oben auf der Druckrohrhauptleitung ein paar Meter hinter dem Einlassventil, um die Pumpe (6) vor dem Restanstiegsdruck zu schützen, wobei das freigesetzte Wasser aus der Druckrohrhauptleitung (9) in das Hauptreservoir fließt;
eine Reihe von Anstiegstanks (13-A, 13-B), die das Anstiegswasser aus der Druckrohrhauptleitung während der Hochdruckkompression absorbieren und das Wasser während der Niedrigdruckexpansion in die Druckrohrhauptleitung zurückgeben, wobei die Tanks mit Einwegdruckablassventilen ausgestattet sind, die normalerweise geschlossen sind, um Luft einzuschließen, um die Luftkompressionskraft während der Hochdruckkompression zu bilden, während es ermöglicht wird, dass atmosphärische Pressluft während der Niedrigdruckexpansion in die Anstiegstanks hineingezogen wird;
ein unidirektionales, kugelförmiges Ventil (5), welches mit dem Ende der Druckrohrhauptleitung verbunden ist und wie ein Kugelventil mit einer Durchbohrung aufgebaut ist, welches sich um 360° auf seiner Achse unaufhörlich in eine einzige Richtung dreht und ein rundes Schließteil mit einem passenden runden Sitz aufweist, welches eine gleichmäßige Abdichtungsbelastung erlaubt, wobei die Durchbohrung auf der Kugel die Außenfläche in vier Teile teilt, wobei zwei Teile die Druckrohrhauptleitung öffnen und die anderen zwei Teile sie schließen; wobei an der Kugel zwei gegenüberliegende, wie Spielzeugspitzen geformte Vertiefungen auf ihrer sich drehenden Fläche angeordnet sind, die das Drehmoment erhöhen und
die durch einen Motor mit einer Welle angetrieben werden, der das Schließteil unaufhörlich dreht und den kombinierten kinetischen Druck und die elastische Energie, die in der gesamten Wassersäule gesammelt wird, größtenteils in einen Wasserschlag von zumindest 1400 m Druckenergie umwandelt, wobei sich das Ventil im folgenden Moment wieder öffnet und die Druckenergie in einen Wasserstrahl mit einer hohen kinetischen Energie umwandelt, wobei das Ventil so gestaltet ist, dass es sich bei ungefähr 4 Sekunden pro Umdrehung dreht, wobei die Öffnungsphase genau abgestimmt ist, um den Wasserschlagdruck zurück auf die anfängliche niedrigere Geschwindigkeitshöhe zurückzubringen, wobei der Kugelöffnungsdurchmesser zweimal größer als der Innendurchmesser der Druckrohrhauptleitung ist, der mit einer ausreichenden Gegenmasse stark verankert ist;
eine Konvergenzrückschlagdüse (29), die dem Ventil (5) nachgelagert angebracht ist;
einen Pelton Turbinen-Generator (14, 15), dessen Schaufeln durch den kinetischen Energiestrahl, der von der Druckrohrhauptleitung ausgeht, getroffen werden;
eine Welle, die die Turbine mit dem Hauptgenerator (15) verbindet, um elektrische Energie zu erzeugen, und die auch Schwungräder aufweist, die befestigt sind, um mechanische Energie zu speichern und an den Rotor freizugeben, um eine optimale Geschwindigkeit aufrechtzuerhalten, wobei die Leistungsfähigkeit mindestens 50MW und mehr beträgt;

ein Endreservoir (17), das das verbrauchte Wasser innerhalb des Kraftwerks (11) aufnimmt;

ein Abflussrohr (18), das das verbrauchte Wasser in das Hauptreservoir (1) zurück- und durch die Schwerkraft aus dem Kraftwerk herausleitet;

eine Reihe von Vakuum-Saugrohren (19-A, 19-B, 19-C), die das Hauptreservoir (1) mit der Druckrohrhauptleitung (9) verbinden, wobei jedes Saugrohr einen Durchmesser aufweist, der die gleiche Größe wie die Druckrohrleitung aufweist, wobei ihre Wasserquelle das Hauptreservoir (1) ist, das die Menge des Wassers, die unmittelbar für die Druckrohrhauptleitung benötigt wird, durch die Druckdifferenz aufgrund des höheren Drucks von mindestens 3 m Fallhöhe plus dem Atmosphärendruck von 10,3 m Wasser hereinzieht, gegenüber dem teilweisen Unterdruckvakuum, welches durch die plötzliche Expansion des Hochdruckwasserstrahls erzeugt wird, wobei die Ausstoßung die Höhe des Wasserschlags in Geschwindigkeitshöhe umwandelt, mit dem nachfolgenden steilen Abfall des Drucks innerhalb der Druckrohrleitung (9) in ein teilweises Unterdruckvakuum, wobei der Wasserübergang durch Einwegventile (20-A, 20-B, 20-C) gesteuert wird, die unterhalb der Druckrohrleitung (9) angebracht sind;

eine Hilfspumpe (24), die Wasser von dem Hauptreservoir (1) in die Druckrohrhauptleitung (9) bringt, um ein ausreichendes Volumen von mindestens 5 Metern Druckwassersäule zu vervollständigen, das für die nächste Runde des Wasserschlags gebraucht wird;

eine Hilfspumpenleitung (25), die die Hilfspumpe (24) mit der Druckrohrhauptleitung verbindet, wobei ihr Innendurchmesser die Hälfte des Durchmessers der Druckrohrhauptleitung beträgt;

ein unidirektionales, kugelförmiges Hilfsventil (26), das die gleiche Größe und Drehgeschwindigkeit wie das kugelförmige Hauptventil (5) aufweist und den Druck des Wassers in die Druckrohrhauptleitung steuert, die ein nachgelagertes Rückschlagventil (26-A) aufweist, um eine Wasserschlagdruckauflösung zu verhindern, wobei beide kugelförmigen Ventile (5, 26) ihre relativen Positionen als eine Zeitfunktion einnehmen,

einen Start-/Wiederanfahr-Generator (3), um die Pumpen (6; 24; 27) und die Anfangsdrehung der kugelförmigen Ventile zu starten und am Anfang laufen zu lassen, wobei der Generator aber auch als eine Wiederanfahrenergiezufuhr funktioniert, die dem System hinzugefügt wird;

eine Wiederanfahrpumpe (27), die das System regelmäßig neu mit Energie versorgt, indem eine Eingabe hinzugefügt wird, um das Niveau der benötigten Energie beizubehalten;

ein Wiederauffüllungsrohr (21), welches Wasser von einer nahen natürlichen Quelle zuleitet, um das durch Verdunstung verloren gegangene Wasser zu ersetzen, wobei dies getan wird, sobald dies erforderlich ist, um die Fallhöhe konstant zu halten.

2. Hydroelektrisches System nach Anspruch 1, das eine absichtliche Wiederholung der induzierten Wasserschlagdruckmethode mit der schnellen Schließung des kugelförmigen Ventils (5) ist, welches die kinetische und die Druckenergie vereinigt, und zusätzlich die elastische potentielle Energie, welche aus dem Pool latenter kinetischer Energie in den intermolekularen Räumen des atmosphärischen Wassers umgewandelt wird, wobei diese meistens in einen hohen Wasserschlagdruck umgewandelt werden, wobei sein Wert das Produkt seiner Dichte multipliziert mit seiner Geschwindigkeit und seiner Schnelligkeit ist, wobei dies auf dem Prinzip der Energieerhaltung beruht und auf den physikalischen Eigenschaften des Wassers, wie seinem spezifischen Gewicht und seinem Volumen-Elastizitätsmodul $E_v$, welches eine Schnelligkeit von ca. 1428 m/s mit der Gleichung

$$Wp = [(g \, / \, Wsp) \, E_v]^{1/2};$$

erzeugt;

von einer ständigen Flussgeschwindigkeitshöhe von mindestens 5 Metern wird sie umgeformt und bis zu einer Höhe von bis zu mindestens 1400 m hohen Druckhöhe akkumuliert; ein anschließendes schnelles Öffnen desselben Ventils, was die Druckkraft in einen Wasserstrahl mit einer hohen kinetischen Energie zurückwandelt, der aus der Druckleitung herausschießt, um auf die Schaufeln des Pelton Turbinen-Generators aufzutreffen und dabei elektrische Energie zu erzeugen, wobei die kugelförmigen Ventile stark mit ausreichender Gegenmasse verankert sind.

3. Hydroelektrisches System nach Anspruch 1, das eine vorgelagerte Vakuumsaugkraft des kugelförmigen Ventils nach dem plötzlichen Ausstoß des hochkomprimierten Wasserstrahls aus der Druckrohrhauptleitung (9) aufweist, wobei diese plötzliche Umwandlung von Druckenergie in kinetische Energie einen sehr steilen Druckabfall in ein teilweises Unterdruckvakuum innerhalb der Druckrohrhauptleitung verursacht, und demnach ein Druckunterschied mit dem höheren Druck der Fallhöhe von mindestens 3 m plus dem Atmosphärendruck von 10,3 m Wasserkraft ein Wasservolumen hereinzieht, da es schnell einen Druckausgleich in der Druckrohrhauptleitung sucht, wobei diese Arbeitsweise auf dem Prinzip der Energieerhaltung basiert, d.h., wenn flüssige Druckenergie in flüssige kinetische Energie umgewandelt wird, dann besteht ein assoziierter Druckabfall, ähnlich dem Vorgang in dem Enghals einer Venturiröhre, wobei dieser Druckabfall einen sekundären Flüssigkeitstransfer von dem Hauptreservoir zu der Druckrohrhauptleitung auslöst, wenn sich die Ventile öffnen, um Wasser hereinzulassen, welches den Druckausgleich sucht; es stellt aber auch der Druckrohrhauptleitung viel benötigtes Wasser bereit, um den nächsten Zyklus des Wasserschlags aufrechtzuerhalten, wobei dieser induzierte physikalische Wasserübertragungsmechanismus durch die Saugkraft wie der Betrieb einer Motorpumpe funktioniert, aber ohne jede Eingabe von elektrischer Energie, wobei diese Saugkraft hauptsächlich durch den atmosphärischen Luftdruck und die Fallhöhe aus dem Hauptreservoir verursacht wird.

4. Hydroelektrisches System nach Anspruch 1, das eine Hilfspumpe (24) aufweist, die von einem elektrischen Motor angetrieben wird, die Wasser von dem Hauptreservoir (1) in die Druckrohrhauptleitung (9) hineinzieht, um eine zusätzliche Wassermenge und Druck für den nächsten Wasserschlag bereitzustellen.

5. Hydroelektrisches System nach Anspruch 1, das eine Hilfspumpenleitung (25) aufweist, die die Hilfspumpe (24) mit der Druckrohrhauptleitung verbindet, wobei ihr Innendurchmesser die Hälfte des Innendurchmessers der Druckrohrhauptleitung beträgt.

6. Hydroelektrisches System nach Anspruch 1, das ein unidirektionales, kugelförmiges Ventil (26) aufweist, welches die gleichen Abmessungen und Drehgeschwindigkeit wie das kugelförmige Hauptventil (5) aufweist, wobei sich beide kugelförmigen Ventile in einer Weise drehen, dass der Wasserfluss durch das kugelförmige Hilfsventil (26) einen kurzen Augenblick vor der Öffnungsphase des kugelförmigen Hauptventils (5) geschieht, und das Schließen des Hilfsventils ebenfalls vor dem Schließen des kugelförmigen Hauptventils geschieht, um das Auflösen des positiven Wasserschlagdrucks zu verhindern.

7. Hydroelektrisches System nach Anspruch 1, das eine Konvergenzrückschlagdüse (29) aufweist, die an der Ausflußseite des kugelförmigen Ventils (5) angebracht ist, wobei die Rückschlagkraft des Strahls eine Kolbenstange (31) drückt, um die Arbeit zu tun.

8. Hydroelektrisches System nach Anspruch 7, wobei der Rückschlagkolben innerhalb der Druckkammer (30) liegt und Flüssigkeit in das Druckrohr (34) hineinzwingt, um die Arbeit zu tun, wobei er durch Säulen (29-c) unterstützt wird, die sich entlang von Führungsschienen (29-d) bewegen, wobei er eine mechanische Feder (29-e) aufweist, um während der Kompression Energie zu speichern, und sie zu verwenden, um die Düse zurück in die Ausgangsposition zu drücken, wobei er auch eine Luftauslassöffnung (29-b) aufweist, die es der Luft erlaubt, sich während des Betriebs frei in und aus der Luftkammer (29-a) zu bewegen.

9. Hydroelektrisches System nach Anspruch 8, wobei die Druckkammer (30) ein Einlassvakuumsaugrohr (32) aufweist, welches Wasser von dem Endreservoir (17) während der Niederdruckausdehnung herbeizieht und ein Auslassdruckrohr (34) aufweist, welches gepresste Flüssigkeit während der Kompression zur Verfügung stellt, um die Arbeit zu tun, wobei beide Rohre (32, 34) einzeln durch Checkventile (33, 35) gesteuert werden.

10. Hydroelektrisches System nach Anspruch 8, wobei die komprimierte Flüssigkeit von dem Druckrohr (34) als eine zusätzliche Druckkraft auf die Druckrohrhauptleitung (9) wirkt und zusätzlich eine größere Wassermenge zu der Druckrohrhauptleitung hinzufügt.

11. Hydroelektrisches System nach Anspruch 7, wobei der hin- und hergehende Kolben (31) eine lineare bis kontinuierliche Rotationseinheit antreibt, wobei das Rotationselement an den Rotor eines Generators gekoppelt ist, um Elektrizität zu erzeugen.

12. Hydroelektrisches System nach Anspruch 7, wobei der Kolben eine Druckkraft in einen Entsalzungstank antreibt, wobei Salze und Lösungen durch eine Filtermembran entfernt werden.

13. Hydroelektrisches System nach irgendeinem der Ansprüche 1 bis 12, wobei das unidirektionale, kugelförmige Ventil (5) die Rückschlageinheit ist, und ohne die Konvergenzrückschlagdüse arbeitet, wobei diese Einheit mit allem Zubehör mit Funktionen ähnlich denen der erwähnten vollständig ist, wie die Druckkammer, die Kolbenstange, das Auslassdruckrohr, das Einlaßsaugrohr, die Feder, die Luftkammer, die Luftablassöffnung, Säulen und Schienenführung.

**EP 2 071 182 B1**

14. Hydroelektrisches System nach Anspruch 1, das eine Reihe von Anstiegtanks aufweist, die nahe dem Anfang vorgelagert zu der Druckrohrhauptleitung angebracht sind und mit Einwegventilen (4) ausgerüstet sind, die normalerweise an ihrem oberen Ende geschlossen sind, um komprimierten Luftdruck anzusammeln, wenn die Anstiegshöhe von hochverdichtetem Wasser den oberen Teil des Tanks während der Wasserschlagsbildungsphase hochdrückt; diese gespeicherte Energie wird freigesetzt, wenn die Druckkraft während der Druckablassphase in die Druckrohrleitung fließt, wobei diese komprimierte Luft eine physikalische Flüssiggas-Schnittstelle mit einer dynamischen Kraft darstellt, die keine elektrische Energie verbraucht, wobei weiterhin, wenn der Druck innerhalb des Tanks unter den bestehenden atmosphärischen Druck fällt, sich das Einlassventil öffnet, um schnell atmosphärische Druckluft hineinschießen zu lassen, um den Wasserspiegel in den Tanks weiter nach unten zu drücken, wodurch der Wasserdruck in den Druckrohrhauptleitungsfluss geführt wird, ohne irgendeine elektrische Energie zu verbrauchen.

15. Hydroelektrisches System nach Anspruch 1, das einen oder mehrere Pelton Turbinen-Generatoren mit einem Leistungsvermögen von mindestens 50 MW und mehr aufweist, und das Trägheitsschwungräder mit einer beträchtlichen Masse aufweist, um mechanische Kraft zu speichern und freizusetzen, um die pulsierende Art der Strahlkraft auszugleichen und **dadurch** die optimale Frequenz des Rotors beizubehalten, wodurch die Drehkraft durch die Trägheit erhalten und an den verbrauchenden drehenden Rotor abgegeben wird, ohne irgendeine elektrische Energie zu verbrauchen.

16. Hydroelektrisches System nach Anspruch 1, das eine variable Geschwindigkeitsmotorpumpe (6) mit einer Druckhöhe von 130 m bis 400 m und mehr mit einer Motorkraft mit ausreichendem Leistungsvermögen aufweist; nach dem Start muss es ungefähr eine Minute von der Energie des Wasserflusses sammeln, um einen stabilen Zustand der fließenden Geschwindigkeitshöhe von mindestens 5 m in der Druckrohrhauptleitung zu erreichen; zusammen mit der hydraulischen Gradientendruckenergiehöhe dient es als die anfängliche, grundlegende Kraft des Systems für den Wasserschlag und stellt das Verfahren der Energieumwandlungen zum Fortführen ein.

17. Hydroelektrisches System nach irgendeinem der Ansprüche 1 bis 16, das eine charakteristische Energie bildet, die verschiedene Formen von Energieeingaben und eine einzelne, konsolidierte Form einer Energieausgabe als Elektrizität umfasst.

18. Hydroelektrisches System nach irgendeinem der Ansprüche 1 bis 17, das einen Start-/Wiederanfahrgenerator (3) aufweist, welcher durch eine bestehende Energienutzungsquelle ersetzt werden kann; es ist die Quelle der ursprünglichen Energiezufuhr für die Hauptpumpe und das kugelförmige Ventil, wobei die Stromleitung nach dem Anschalten des Hauptgenerators (15) geschlossen wird; denn wie bei jedem sich bewegendem Energiesystem, welches dissipativen Reibungen und der Schwerkraft unterworfen ist, können Energieverluste einen Punkt erreichen, wo das Wiederanfahren des Energieniveaus notwendig ist, wobei die Energie des Systems in regelmäßigen Abständen eine Verstärkung erhalten muss, die aus der Energieschleifen-Wiederanfahrpumpe (27) kommen muss, die durch elektrische Energie von diesem Wiederanfahrgenerator mit Energie versorgt wird, um das Energieabgabeniveau wiederherzustellen.

19. Hydroelektrisches System nach irgendeinem der Ansprüche 1 bis 18, welches eine zweite Druckrohrhauptleitung mit denselben Ausrüstungen und mit denselben Größen mit ähnlichen Funktionen aufweist und in der entgegengesetzten Richtung zu der anderen Druckrohrhauptleitung angeordnet ist.

20. Hydroelektrisches System nach irgendeinem der Ansprüche 1 bis 19, welches die zwei gegenüber angeordneten, kugelförmigen Ventile aufweist, die sich in einer abwechselnden Weise in einer Rotationsweise des Speichems und Freigebens von Wasserschlag-Strahlen bewegen, um den Pelton Turbinen-Generator bei einer optimalen Leistung am Laufen zu halten.

21. Hydroelektrisches System nach irgendeinem der Ansprüche 1 bis 20, welches einen Strom von konvertierbaren Energieeingaben aufweist, welche acht Kraftformen aufweisen: Unter ihnen würde nur eine Kraftform eine wesentliche Menge an elektrischer Energie benötigen - d.h. (a) die Druckhöhen von Motorpumpen, während die anderen sieben Kraftformen natürlich sind, physikalische und Luft-Flüssigkeits-Schnittstellendynamiken induzierte Kräfte und Umwandlungen; (b) die durch die Schwerkraft induzierten Druckhöhen in dem Hauptreservoir und in dem Endreservoir, welche ebenso die atmosphärische Druckhöhe von 10,3 m Wasser und das spezifische Gewicht des Mediums Wasser induzieren, (c) die Geschwindigkeitshöhe des Wasserstrahls, welcher von der Druckrohrhauptleitung abgegeben wird, umgewandelt von dem hohen Wasserschlagdruck, der durch das schnelle Schließen des kugelförmigen Ventils induziert wurde, (d) die induzierte Vakuumsaugkraft nach dem plötzlichen großen Ausstoß des Wasserstrahls; ein teilweiser Vakuumzustand wird erzeugt, welcher das unter höherem Druck stehende Wasser veranlassen würde, schnell in ein unter weniger hohem Druck stehendes Gebiet zu fließen; (e) die gleiche und in der Richtung entgegengesetzte Rückstoßkraft, die durch den ausgestoßenen Strahl gemäß Newtons drittem Bewegungsgesetz erzeugt wird; (f) die akkumulierten, komprimierten Luftdrücke in den Anstiegstanks während der Hochkompressionsphase; (g) der vorherrschende atmosphärische Luftdruck, welcher während der Niederdruck-Expansionsphase in die Aufstiegstanks hinunterdrückt; (h) die Rotationsträgheitskraft des sich in Bewegung befindenden Rotors.

22. Hydroelektrisches System nach irgendeinem der Ansprüche 1 bis 21, das als ein Energie/Massegleichgewicht ausgedrückt werden kann, wobei die umwandelbaren Energiebündel-/Masse-Eingaben gleich den Energieausgaben plus den Energie-/Masse-Verlusten sein müssen, wobei die umwandelbaren Energie-/Masse-Eingaben bestehen aus: a) Schwerkraftinduzierten Druckhöhen des Hauptreservoirs und des Endreservoirs; b) Geschwindigkeitshöhe des ca. 1200 m Strahls, der von einem umgewandeltem Wasserschlagdruck freigegeben wird, welcher die umgewandelte kinetische Energie der atmosphärischen Flüssigkeit mit einschließt; c) Vakuumsaugkraft, die nach dem plötzlichen, massiven Ablassen in der Druckrohrhauptleitung gebildet wird und ein Wasservolumen direkt aus dem Hauptreservoir hineinzieht; d) Rückstoßkraft des Strahls; e) komprimierte Luftdruckenergie innerhalb der Aufstiegstanks, die durch das aufsteigende Wasser während der Kompressionsphase erarbeitet wurde; f) dem atmosphärischen Luftdruck von 10,3 m Wasser, welcher während der Dekompressionsphase in die Aufstiegstanks drückt; g) der Rotationsträgheitskraft des Rotors in Bewegung; h) der mechanischen Kraft der elektrischen Motoren, d.h. der Hauptpumpe, der Hilfspumpe, der periodischen Wiederanfahrpumpe und der unidirektionalen kugelförmigen Ventile; i) der Wassermasse, die nötigenfalls dem Hauptreservoir durch die Auffüll-Leitung hinzugefügt wird, wobei die Energieausgabe der erzeugten elektrischen Energie von zumindest 50 MWh entspricht;
wobei die Energie-/Masse-Verluste bestehen aus: a) Reibungskraftverlust; b) Energieverlust als Hitze; c) Leitungswandexpansionsverlust; d) Maschineneffizienzverlust; e) Verdampfen von Wassermolekülen.

23. Hydroelektrisches System nach irgendeinem der Ansprüche 1 bis 22, welches eine alleinige, konsolidierte Energieausgabe aufweist, die größer ist als die alleinige Energieeingabeform, welche die mechanische Kraft der Motorpumpen (6; 24; 27) ist, wobei das Prinzip dieser Energieumwandlung mit dem Stromerzeugungssystem einer Windkraftanlage verglichen werden kann, wobei die alleinige Energieeingabe die Windkraft der Natur ist und die alleinige Ausgabe die elektrische Energie, wobei bei dem vorliegenden Energieumwandlungssystem die mehrfachen Eingaben ebenfalls größtenteils natürliche Kräfte sind, die zusammen als eine einzelne Form einer elektrisch basierten Energieeingabe arbeiten, und die Ausgabe die alleinige, konsolidierte elektrische Energie ist, wobei dieses Elektrizitätserzeugungssystem nicht nur auf einer einzigen Form einer Energieeingabe basiert, sondern auf einer Vielzahl von Energieeingaben, die größtenteils natürliche Kräfte sind, die eine alleinige, konsolidierte elektrische Energieausgabe erzeugen, die größer als die nur eine Form von auf elektrischer Energie basierten Motorleistungseingabe ist.

24. Hydroelektrisches System nach irgendeinem der Ansprüche 1 bis 23, welches eine geschlossene Schleife eines Flusspfades aufweist: von einem Bodenhöhe-Reservoir (1) mit zumindest 3 m Fallhöhe wird dem Wasser eine Verstärkung der Druckhöhe durch eine Hauptmotorpumpe (6) gegeben, um in Richtung einer 1200 m langen Druckrohrhauptleitung (9) gedrückt zu werden, wobei es das Druckablassventil (12), die Aufstiegstanks (13-A, 13-B), Vakuumsaugpumpen (19-A, 19-B, 19-C), Druckwiederaufbaurohre durchläuft und in einem motorisierten, unidirektionalen, kugelförmigen Ventil (5) hoch oben innerhalb des Kraftwerks (11) endet; wobei das sich kontinuierlich drehende kugelförmige Ventil die schnelle Wassersäule in einem schnellen Schließmodus stoppt, so dass der kombinierte kinetische Druck und die elastische Energie in der gesamten Wassersäule zum größten Teil in einen Wasserschlag von immenser Drukkenergie umgewandelt werden; sobald sich das kugelförmige Ventil öffnet, wird Druckwasser wieder in einen hochkinetischen Energiestrahl umgewandelt, der aus der Druckrohrhauptleitung (9) herausschießt, um auf den Pelton Turbinen-Generator aufzutreffen, um elektrische Leistung zu erzeugen; das verbrauchte Wasser fällt nun in das Endreservoir (17), wobei Wasser durch die Schwerkraft aus dem Endreservoir durch das Ausflussrohr (18) zurück zu dem ursprünglichen Hauptreservoir (1) gezogen wird und der Kreislauf weitergeht.

25. Hydroelektrisches System nach irgendeinem der Ansprüche 1 bis 24, welches eine zusätzliche Unterschleife des Wasserpfades aufweist: wenn das unidirektionale, kugelförmige Ventil (5) geöffnet wird, schießt eine große Wassermenge aus der Druckrohrhauptleitung (9) heraus und eine Vakuumsaugkraft wird gebildet, die das Wasser aus dem Hauptreservoir (1) durch die Vakuumsaugrohre (19-A, 19-B, 19-C) direkt in die Druckrohrhauptleitung (9) hineinzieht, wobei sie die Hauptpumpe und den Rest der nachgelagerten Druckrohrhauptleitung umgeht; unterstützt durch das Wasser aus dem Druckrohr (34) und dem Wasser aus der Hilfspumpenleitung (25) fließt das gesamte Wasservolumen zu dem Pelton Turbinen-Generator hin und dann zu dem Endreservoir in dem Kraftwerk, und dann durch die Schwerkraft zurück zu dem Hauptreservoir (1), und der Kreislauf geht weiter.

26. Hydroelektrisches System nach irgendeinem der Ansprüche 1 bis 25, welches eine zweite Ausführungsform aufweist, in der die Kraft der Druckhöhe, die durch die Hauptpumpe (6) bereitgestellt wird, durch die Kraft der Fallhöhe (aus der Schwerkraft hervorgehend) aus einem oberen Reservoir (22) oben auf einem Bergplateau ersetzt wird, wobei die anderen Ausrüstungen und Strukturen des Systems in ihren Größenordnungen und Funktionen mit denen der ersten Ausführungsform identisch sind.

27. Hydroelektrisches System nach irgendeinem der Ansprüche 1 bis 26, welches eine Motorpumpe (23) aufweist, die Wasser von einem unteren Niveau zu dem oberen Reservoir (22) zum Benutzen als Fallhöhe für die Rezirkulation transportiert.

28. Hydroelektrisches System nach irgendeinem der Ansprüche 1 bis 27, wobei die verwendete Flüssigkeit nicht Wasser ist, sondern eine andere Flüssigkeit wie Öl, elementares Quecksilber oder anderes; für solche Flüssigkeiten sollten die Druckrohrleitungen von der Größe her angepasst werden, damit sie zu ihren jeweiligen Sätzen der Dichte, des Volumens, des Elastizitätsmoduls, der Viskosität und des Dampfdrucks passen.

**Revendications**

1. Système hydroélectrique comprenant :

une masse d'eau dans un réservoir principal (1) au niveau du sol,
masse d'eau fraîche ou saline, artificielle ou naturelle, ayant au moins trois mètres d'élévation à partir de la ligne de référence ;
une conduite d'entrée arrondie (2) ;
une pompe principale (6) qui pousse l'écoulement en régime stationnaire à l'intérieur de la conduite forcée principale (9) en aval, actionnée par un moteur à vitesse variable ;
un tuyau convergent (7) ;
un robinet-vanne (8) qui commande l'écoulement d'eau dans la conduite forcée principale (9) ;
une épaisse conduite forcée principale (9) d'environ 1200 m qui se termine en hauteur dans la centrale électrique (11) avec une décharge en régime stationnaire d'au moins 10 m/s ou une hauteur dynamique de cinq mètres, d'un diamètre intérieur d'au moins 0,3 m à 1 m avec une épaisseur d'environ 15 % du diamètre intérieur, réalisée dans un matériau résistant tel que l'acier au carbone sans soudure, dont la surface intérieure, revêtue d'une épaisse couche de matériau lisse et résistant, est apte à être de nouveau revêtue si nécessaire en présence de cavitations ou de corrosion fortes, dont l'axe médian sert de ligne de référence et qui présente de nombreux joints d'expansion sur sa longueur ;
une soupape de surpression (12) sur le dessus de la conduite forcée principale quelques mètres après le robinet-vanne pour protéger la pompe (6) de la surpression résiduelle, l'eau déchargée s'écoulant de la conduite forcée principale (9) dans le réservoir principal ;
une série de réservoirs de compensation (13-A, 13-B) recueillant l'eau venant de la conduite forcée principale lors de la compression à haute pression et relâchant l'eau vers la conduite forcée principale lors de l'expansion à basse pression, ces réservoirs étant équipés de soupapes de surpression unidirectionnelles qui sont normalement fermées pour piéger de l'air afin de produire la force de compression d'air pendant la compression à haute pression tout en permettant à de l'air à la pression atmosphérique d'être aspiré dans les réservoirs de compensation pendant l'expansion à basse pression ;
une vanne sphérique unidirectionnelle (5), raccordée à l'extrémité de la conduite forcée principale, structurée comme un robinet à bille avec un alésage traversant, qui tourne à 360° sur son axe en continu dans un seul sens, ayant un élément d'obturation rond avec un siège rond correspondant qui permet une contrainte d'étanchéité uniforme, l'alésage traversant sur la sphère divisant la périphérie en quatre parties, deux parties ouvrant la conduite forcée principale et les deux autres parties la fermant, la sphère présentant sur son plan de rotation deux concavités opposées en forme de toupie qui augmentent le couple de rotation, la vanne étant actionnée par un moteur avec un arbre qui fait tourner l'élément d'obturation en continu, convertissant la combinaison de pression cinétique et d'énergie élastique accumulée dans toute la colonne d'eau essentiellement en un coup de bélier d'au moins 1400 mètres d'énergie de pression, la vanne se rouvrant à un instant ultérieur, et reconvertissant l'énergie de pression en un jet d'eau à haute énergie cinétique, la vanne étant conçue pour faire un tour en environ quatre secondes avec une phase d'ouverture temporisée pour ramener la pression de coup de bélier à la hauteur dynamique initiale plus basse ; le diamètre de l'orifice de sphère étant égal à 2 fois le diamètre intérieur de la conduite forcée principale, la vanne étant fermement ancrée avec une contre-masse suffisante ;

une buse de recul convergente (29) attenante au côté aval de la vanne (5) ;

un groupe turbine Pelton-alternateur (14, 15) dont les augets sont frappés par le jet à haute énergie cinétique provenant de la conduite forcée principale ;

un arbre couplant la turbine à un alternateur principal (15) pour produire de l'énergie électrique, lequel est aussi pourvu de volants d'inertie pour stocker et restituer de l'énergie mécanique au rotor afin de maintenir une vitesse optimale, sa capacité étant d'au moins 50 MW et plus ;

un réservoir aval (17) recevant l'eau dépensée à l'intérieur de la centrale électrique (11) ;

un tuyau d'écoulement (18) évacuant l'eau dépensée de la centrale électrique et la ramenant au réservoir principal (1) par gravité ;

une série de tuyaux d'aspiration (19-A ; 19-B, 19-C) raccordant le réservoir principal (1) à la conduite forcée principale (9) ; chaque tuyau d'aspiration ayant un diamètre approximativement de la taille de la conduite forcée principale, leur source d'eau étant le réservoir principal (1), amenant un volume d'eau immédiat nécessaire pour la conduite forcée principale par la pression différentielle due à la pression supérieure venant de la hauteur d'élévation d'au moins 3 mètres plus la pression atmosphérique de 10,3 mètres d'eau par rapport au vide partiel à basse pression créé par la soudaine expulsion du jet d'eau à haute pression ;

l'expulsion convertissant la hauteur de pression de coup de bélier en hauteur dynamique et entraînant une chute brutale de la pression à l'intérieur de la conduite forcée (9) à un vide partiel à basse pression ; le transfert d'eau étant commandé par des vannes unidirectionnelles (20-A ; 20-B, 20-C) placées au-dessous de la conduite forcée (9) ;

une pompe auxiliaire (24) qui amène de l'eau du réservoir principal (1) à la conduite forcée principale (9) pour obtenir un volume d'au moins cinq mètres de hauteur d'eau nécessaire pour le prochain cycle de coup de bélier ;

une conduite de pompe auxiliaire (25) qui raccorde la pompe auxiliaire (24) à la conduite forcée principale, dont le diamètre intérieur est égal à la moitié du diamètre de la conduite forcée principale ;

une vanne sphérique unidirectionnelle auxiliaire (26) ayant des dimensions et une vitesse de rotation identiques à celles de la vanne sphérique principale (5), qui commande l'écoulement d'eau dans la conduite forcée principale et comporte un clapet antiretour (26-A) en aval pour empêcher la dissipation de la pression de coup de bélier ;

les deux vannes sphériques (5, 26) ayant des positions relatives en fonction du temps ;

un alternateur de démarrage/d'appoint (3) pour démarrer et faire fonctionner initialement les pompes (6 ; 24 ; 27) et pour la rotation initiale des vannes sphériques, fonctionnant aussi comme une source d'énergie d'appoint à fournir au système ;

une pompe d'appoint (27) qui fournit périodiquement de l'énergie au système pour maintenir le niveau d'énergie nécessaire ;

un tuyau de remplissage (21) qui amène de l'eau d'une source naturelle proche pour remplacer l'eau perdue par évaporation,

dans la mesure nécessaire au maintien d'une hauteur d'élévation constante.

2. Système hydroélectrique selon la revendication 1, qui prévoit une répétition intentionnelle d'un mode de pression en coup de bélier provoqué par la fermeture rapide de la vanne sphérique (5), combinant l'énergie cinétique et l'énergie de pression plus l'énergie potentielle élastique qui est convertie à partir du réservoir d'énergie cinétique latente présente dans les espaces intermoléculaires de l'eau atmosphérique, celles-ci étant transformées pour l'essentiel en une pression de coup de bélier élevée dont la valeur est le produit de sa densité multipliée par sa vélocité et sa célérité ; ledit système étant basé sur le principe de conservation de l'énergie et sur les propriétés physiques de l'eau telles que son poids spécifique et son module d'élasticité volumique $E_v$, pour produire une célérité d'environ 1428 m/s selon l'équation :

$$\mathrm{Wp} = [(g\ /\ \mathrm{Wsp})\ \mathrm{Ev}]^{1/2}\ ;$$

à partir d'une hauteur dynamique d'écoulement permanent d'au moins cinq mètres, elle est transformée et s'accumule jusqu'à une hauteur de pression d'au moins 1400 mètres, l'ouverture rapide ultérieure de ladite vanne retransforme la hauteur de pression en jet d'eau à haute énergie cinétique qui jaillit de la conduite forcée pour venir frapper les augets du groupe turbine Pelton-alternateur afin de produire de l'énergie électrique, les vannes sphériques étant fermement ancrées avec une contre-masse suffisante.

3. Système hydroélectrique selon la revendication 1, qui prévoit une force d'aspiration en amont de la vanne sphérique après la soudaine expulsion du jet d'eau sous haute pression de la conduite forcée principale (9), cette conversion soudaine d'énergie de pression en énergie cinétique provoquant une chute brutale de pression jusqu'à un vide partiel à basse pression à l'intérieur de la conduite forcée principale ; ainsi, une pression différentielle, due à la pression supérieure venant de la hauteur d'élévation d'au moins 3 mètres plus la pression atmosphérique de 10,3 mètres de force d'eau, fait entrer un volume d'eau pour rétablir rapidement un équilibre de pression dans la conduite forcée principale ; cette opération est basée sur le principe de conservation de l'énergie, à savoir que lorsqu'une énergie de pression de liquide est convertie en une énergie cinétique de liquide, il existe une chute de pression associée très semblable à celle qui se produit dans le goulot étroit d'un tube Venturi ; cette chute de pression entraîne un transfert secondaire de liquide du réservoir principal vers la conduite forcée principale, les vannes s'ouvrant pour admettre de l'eau et rétablir un équilibre de pression ; cela fournit aussi à la conduite forcée principale l'eau nécessaire pour entretenir le prochain cycle de coup de bélier ; ce mécanisme physique de transfert d'eau induit par la force d'aspiration agit comme une motopompe, mais sans apport de puissance électrique ; cette force d'aspiration est due principalement à la pression de l'air atmosphérique et à la hauteur d'élévation venant du réservoir principal.

4.  Système hydroélectrique selon la revendication 1, qui prévoit une pompe auxiliaire (24) actionnée par un moteur électrique qui refoule de l'eau du réservoir principal (1) vers la conduite forcée principale (9) pour fournir le volume d'eau supplémentaire et la pression nécessaires au prochain coup de bélier.

5.  Système hydroélectrique selon la revendication 1, qui prévoit une conduite de pompe auxiliaire (25) qui raccorde la pompe auxiliaire (24) à la conduite forcée principale et dont le diamètre intérieur est égal à la moitié du diamètre de la conduite forcée.

6.  Système hydroélectrique selon la revendication 1, qui prévoit une vanne sphérique unidirectionnelle auxiliaire (26) qui a des dimensions et une vitesse de rotation identiques à celle de la vanne sphérique principale (5), les deux vannes sphériques tournant de façon que l'eau s'écoule à travers la vanne sphérique auxiliaire (26) un court instant avant la phase d'ouverture de la vanne sphérique principale (5) et que la fermeture de la vanne auxiliaire soit aussi en avance par rapport à la fermeture de la vanne sphérique principale pour empêcher la dissipation de la pression positive de coup de bélier.

7.  Système hydroélectrique selon la revendication 1, qui prévoit une buse de recul convergente (29) attenante au côté sortie de la vanne sphérique (5), la force de recul du jet poussant une tige de piston (31) pour produire un travail.

8.  Système hydroélectrique selon la revendication 7, dans lequel le piston de recul est disposé à l'intérieur de la chambre de pression (30) et pousse le liquide dans le tuyau de pression (34) pour produire un travail, lequel piston de recul est supporté par des colonnes (29-c) qui le déplacent le long de rails de guidage (29-d), comporte un ressort mécanique (29-e) pour stocker de l'énergie pendant la compression et est utilisé pour ramener la buse dans sa position initiale, et comporte aussi un orifice de décharge d'air (29-b) qui permet à l'air d'entrer et de sortir librement de la chambre d'air (29-a) pendant le fonctionnement.

9.  Système hydroélectrique selon la revendication 8, dans lequel la chambre de pression (30) comporte un tuyau d'aspiration d'entrée (32) qui prélève de l'eau du réservoir aval (17) pendant l'expansion à basse pression et un tuyau de pression de sortie (34) qui fournit du liquide sous pression pendant la compression pour produire un travail, les deux tuyaux (32,34) étant commandés séparément par des clapets antiretour (33, 35).

10. Système hydroélectrique selon la revendication 8, dans lequel le liquide comprimé venant du tuyau de pression (34) agit comme une force de pression d'appoint dans la conduite forcée principale (9) et ajoute un volume d'eau supplémentaire dans la conduite forcée principale.

11. Système hydroélectrique selon la revendication 7, dans lequel le piston à mouvement alternatif (31) entraîne un ensemble de conversion d'un mouvement linéaire en un mouvement rotatif continu, l'élément rotatif étant couplé au rotor d'un alternateur pour produire de l'électricité.

12. Système hydroélectrique selon la revendication 7, dans lequel le piston applique une force de pression dans un réservoir de désalinisation dans lequel les sels et solutés sont éliminés par une membrane de filtration.

13. Système hydroélectrique selon une des revendications 1 à 12, dans lequel la vanne sphérique unidirectionnelle (5) est l'ensemble de recul ; dépourvu de buse de recul convergente, cet ensemble est complet avec tous les accessoires ayant des fonctions similaires à celles mentionnées, tels que chambre de pression, tige de piston, tuyau de pression de sortie, tuyau d'aspiration d'entrée, ressort, chambre d'air, orifice de décharge d'air, colonnes et rails de guidage.

**14.** Système hydroélectrique selon la revendication 1, qui prévoit une série de réservoirs de compensation situés à proximité du début côté amont de la conduite forcée principale et équipés à leur sommet de vannes unidirectionnelles (4) normalement fermées, cela afin d'accumuler une pression d'air comprimé lors de la montée soudaine du niveau d'eau sous haute pression vers la partie supérieure des réservoirs pendant la phase de formation de coup de bélier ; cette énergie stockée est restituée sous forme de force de pression à l'écoulement de la conduite forcée principale pendant la phase de décompression ; cet air comprimé présente à l'interface liquide/gaz une force dynamique physique qui ne consomme aucune énergie électrique ; en outre, lorsque la pression à l'intérieur des réservoirs tombe au-dessous de la pression atmosphérique existante, la vanne unidirectionnelle s'ouvre pour admettre de l'air à pression atmosphérique qui fait baisser encore plus le niveau d'eau dans les réservoirs, conduisant la pression d'eau vers l'écoulement de conduite forcée principale sans consommer la moindre énergie électrique.

**15.** Système hydroélectrique selon la revendication 1, qui prévoit un groupe turbine Pelton-alternateur d'une capacité de 50 MW et plus, qui comporte des volants d'inertie d'une masse substantielle pour stocker et restituer de la force mécanique afin de lisser le mode pulsatoire de la force du jet et de maintenir la fréquence optimale du rotor ; de cette manière, une force de rotation est conservée par inertie et restituée au rotor consommateur en rotation sans utiliser la moindre énergie électrique.

**16.** Système hydroélectrique selon la revendication 1, qui prévoit une motopompe à vitesse variable (6) ayant une hauteur de pression dans une plage de 130 à 400 mètres et plus avec une puissance de moteur d'une capacité suffisante ; au démarrage, il est nécessaire d'accumuler de l'énergie d'écoulement d'eau pendant environ une minute pour établir une hauteur dynamique en régime stationnaire d'au moins 5 mètres dans la conduite forcée principale ; avec le gradient hydraulique, la charge de pression sert de force primaire initiale du système pour la pression de coup de bélier et permet au processus de conversions d'énergie de démarrer.

**17.** Système hydroélectrique selon une des revendications 1 à 16, qui crée une énergie distincte comprenant différentes formes d'entrée d'énergie et une seule forme consolidée de sortie d'énergie sous forme d'électricité.

**18.** Système hydroélectrique selon une des revendications 1 à 17, qui prévoit un alternateur de démarrage/d'appoint (3), lequel peut être remplacé par une source d'alimentation électrique existante et est la source de l'entrée initiale d'énergie pour la pompe principale et la vanne sphérique ; sa ligne d'alimentation est fermée à la mise en service de l'alternateur principal (15) ; comme pour tout système énergétique en mouvement sujet à des frictions dissipatives et à la gravité, les pertes énergétiques peuvent atteindre un point où il devient nécessaire de relever le niveau énergétique ; périodiquement, il est nécessaire d'augmenter l'énergie du système à l'aide d'une pompe d'appoint (27) extérieure à la boucle énergétique, alimentée par de l'énergie électrique provenant de cet alternateur d'appoint, pour restaurer le niveau énergétique de sortie.

**19.** Système hydroélectrique selon une des revendications 1 à 18, qui prévoit une seconde conduite forcée principale ayant les mêmes équipements dans les mêmes dimensions, ayant des fonctions similaires et disposée dans une direction opposée à celle de l'autre conduite forcée principale.

**20.** Système hydroélectrique selon une des revendications 1 à 19, qui prévoit deux vannes sphériques disposées en vis-à-vis, se déplaçant d'une manière alternative et dans un mode rotatif de stockage et de libération de jets d'eau sous pression pour maintenir le fonctionnement du groupe turbine Pelton-alternateur à une puissance optimale.

**21.** Système hydroélectrique selon une des revendications 1 à 20, qui prévoit un flux d'entrées d'énergie convertibles comprenant huit formes de force : parmi elles, une seule forme de force a besoin d'une quantité substantielle d'énergie électrique, à savoir (a) les hauteurs de pression des motopompes, tandis que les sept autres formes de force sont naturelles ; forces et conversions physiques et induites par la dynamique à l'interface air-liquide : (b) les hauteurs d'élévation induites par la force de gravité dans le réservoir principal et dans le réservoir aval ainsi que la hauteur de charge atmosphérique de 10,3 mètres d'eau et le poids spécifique du milieu aqueux également induits par elle ; (c) la hauteur dynamique du jet d'eau relâché depuis la conduite forcée principale, converti à partir d'une pression de coup de bélier provoquée par la fermeture rapide de la vanne sphérique ; (d) la force d'aspiration induite après la soudaine et puissante expulsion du jet d'eau, créant un état de vide partiel qui force de l'eau sous haute pression à affluer dans une zone à plus basse pression ; (e) la force de recul égale et en sens opposé produite par le jet expulsé conformément à la troisième loi du mouvement de Newton ; (f) les pressions d'air comprimé accumulées dans les réservoirs de compensation pendant la phase de haute compression ; (g) la pression d'air atmosphérique régnante qui exerce une poussée vers le bas dans les réservoirs de compensation pendant la phase d'expansion à basse pression ; (h) la force d'inertie de rotation du rotor en mouvement.

**22.** Système hydroélectrique selon une des revendications 1 à 21, qui peut être exprimé sous la forme d'un équilibre énergie/masse dans lequel les entrées énergie/masse convertibles doivent être égales à la sortie d'énergie plus les pertes d'énergie/de masse, les entrées énergie/masse convertibles consistant en : a) hauteurs d'élévation induites par la force de gravité dans le réservoir principal et le réservoir aval ; b) jet d'une hauteur dynamique d'environ 1200 m libéré à partir d'une pression de coup de bélier convertie qui implique l'énergie cinétique latente convertie du liquide atmosphérique ; c) force d'aspiration créée par la soudaine et puissante décharge dans la conduite forcée principale amenant un volume d'eau directement depuis le réservoir principal ; d) force de recul du jet ; e) énergie de la pression d'air comprimé à l'intérieur des réservoirs de compensation produite par la montée d'eau pendant la phase de compression ; f) pression d'air atmosphérique de 10,3 mètres d'eau qui s'exerce dans les réservoirs de compensation pendant la phase de décompression ; g) force d'inertie de rotation du rotor en mouvement ; h) force mécanique des moteurs électriques, à savoir pompe principale ; pompe auxiliaire ; pompe d'appoint périodique et vannes sphériques unidirectionnelles ; i) masse d'eau ajoutée au réservoir principal en fonction des besoins à travers le tuyau de remplissage ;

la sortie d'énergie est l'énergie électrique générée d'au moins 50 MW, les pertes d'énergie/de masse consistant en : a) perte de charge par frottement ; b) perte d'énergie sous forme de chaleur ; c) perte d'énergie par dilatation des parois de tuyaux ; d) perte d'énergie dans les machines ; e) évaporation de molécules d'eau.

**23.** Système hydroélectrique selon une des revendications 1 à 22, qui prévoit une sortie d'énergie consolidée simple qui est supérieure à l'entrée d'énergie simple qui est la force mécanique des motopompes (6 ; 24 ;27) ; le principe de cette conversion d'énergie peut être comparé à un système de génération d'électricité par éolienne dans lequel l'entrée d'énergie simple est la force du vent naturel et la sortie simple l'énergie électrique ; dans le présent système de conversion d'énergie, les entrées multiples sont aussi pour la plupart des forces naturelles travaillant en tandem avec une entrée d'énergie électrique sous forme simple, et la sortie est l'énergie électrique consolidée simple ; ce système de génération d'électricité n'est pas basé que sur une forme d'entrée d'énergie, mais sur une multitude d'entrées d'énergie qui sont pour la plupart des forces naturelles qui produisent une sortie d'énergie électrique consolidée simple supérieure à l'unique forme d'entrée d'énergie qui est l'électricité consommée par le moteur électrique.

**24.** Système hydroélectrique selon une des revendications 1 à 23, qui prévoit un circuit en boucle : de l'eau située dans un réservoir (1) au niveau du sol avec au moins trois mètres de hauteur d'élévation est portée à une hauteur de pression supérieure par une motopompe principale (6) et poussée dans une conduite forcée principale (9) de 1200 mètres de long, passant par une soupape de surpression (12), des réservoirs de compensation (13-A, 13-B), des tuyaux d'aspiration (19-A; 19-B, 19-C), des tuyaux de surpression et aboutissant, à travers une vanne sphérique unidirectionnelle (5) motorisée située en hauteur, à la centrale électrique (11) ; la vanne sphérique à rotation continue arrête la colonne d'eau en déplacement rapide dans un mode de fermeture rapide, transformant l'énergie cinétique, de pression et élastique combinée de la colonne d'eau totale essentiellement en un coup de bélier d'une énergie de pression considérable ; lorsque la vanne sphérique s'ouvre, l'eau sous pression est retransformée en un jet à haute énergie cinétique qui jaillit de la conduite forcée principale (9) et frappe le groupe turbine Pelton-alternateur pour générer de l'énergie électrique ; l'eau dépensée tombe ensuite dans le réservoir aval (17) ; du réservoir aval, l'eau est ramenée par gravité à travers le tuyau de sortie (18) vers le réservoir principal d'origine (1) ; et le cycle continue.

**25.** Système hydroélectrique selon une des revendications 1 à 24, qui prévoit une boucle annexe complémentaire du circuit d'eau : lorsque la vanne sphérique unidirectionnelle (5) est ouverte, un énorme volume d'eau jaillit de la conduite forcée principale (9) et il se forme une force d'aspiration qui amène de l'eau du réservoir principal (1) directement à la conduite forcée principale (9) à travers les tuyaux d'aspiration (19-A;19-B, 19-C) en contournant la pompe principale et le reste de la conduite forcée principale en amont ; renforcé par l'eau venant du tuyau de pression (34) et par l'eau venant de la conduite de pompe auxiliaire (25), le volume d'eau total est amené au groupe turbine Pelton-alternateur puis au réservoir aval dans la centrale électrique et revient par gravité au réservoir principal (1) ; et le cycle continue.

**26.** Système hydroélectrique selon une des revendications 1 à 25, qui prévoit un deuxième mode de réalisation dans lequel la force de la hauteur de pression fournie par la pompe principale (6) est remplacée par la force de la hauteur d'élévation (dérivée de la force de gravité) d'un réservoir supérieur (22) au sommet d'un plateau montagneux ; les autres équipements et structures du système sont identiques par leurs dimensions et leurs fonctions au premier mode de réalisation.

27. Système hydroélectrique selon une des revendications 1 à 26, qui prévoit une motopompe (23) qui amène de l'eau du niveau inférieur vers le réservoir supérieur (22) pour atteindre la hauteur d'élévation nécessaire à sa réutilisation.

28. Système hydroélectrique selon une des revendications 1 à 27, dans lequel le liquide utilisé n'est pas de l'eau mais un autre liquide tel que de l'huile, du mercure élémentaire ou autres ; pour de tels liquides, les conduites forcées doivent être redimensionnées pour convenir à leurs valeurs respectives de densité, module d'élasticité volumique, viscosité et pression de vapeur.

Fig. 1

Fig. 2

Fig. 3-A

Fig. 3-B

Fig. 3-C

Fig. 3-D

Fig. 3-E

Fig. 3-F

Fig. 4

Fig. 3-G

Fig. 3-H

Fig. 3-I

Fig. 3

Fig. 5

Fig. 6

## Fig. 7

## Fig. 8

## Fig. 9

26        5

0.00 sec

0.25 sec

0.50 sec

0.75 sec                    NO

1.00 sec              FLOW

1.25 sec

1.50 sec

1.75 sec

2.00 sec

# Fig. 10

Fig. 11

Fig. 12

EP 2 071 182 B1

## Fig. 13

## Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006085782 A
- WO 2006085782 A1
- WO 2004094816 A1
- EP 1850000 A1